# EUROPEAN PATENT SPECIFICATION

(11) **EP 3 232 087 B1**
(45) Date of publication and mention of the grant of the patent: **20.11.2019**
(21) Application number: 15866952.3
(22) Date of filing: 11.12.2015
(51) Int. Cl.: F16H 13/08, F16C 35/077, F02B 33/40, F02B 39/04, F16C 27/06, F16H 13/02, F16H 13/14

(54) **FRICTION ROLLER SPEED INCREASER**
REIBROLLENÜBERSETZUNG
DISPOSITIF D'AUGMENTATION DE VITESSE À ROULEAU DE FROTTEMENT

(30) Priority: 12.12.2014 JP 2014252342; 12.12.2014 JP 2014252343; 12.12.2014 JP 2014252344; 12.12.2014 JP 2014252345; 07.05.2015 JP 2015095027; 14.05.2015 JP 2015099098; 03.06.2015 JP 2015113167
(43) Date of publication of application: 18.10.2017
(73) Proprietor: NSK Ltd., Tokyo 141-8560 (JP)
(72) Inventor: HIKIDA Masafumi, Fujisawa-shi Kanagawa 251-8501 (JP); MATSUDA Yasuyuki, Fujisawa-shi Kanagawa 251-8501 (JP); MORITA Ryuho, Fujisawa-shi Kanagawa 251-8501 (JP); MAEJIMA Hiroki, Fujisawa-shi Kanagawa 251-8501 (JP)
(74) Representative: Grünecker Patent- und Rechtsanwälte PartG mbB
(86) International application number: PCT/JP2015/084751
(87) International publication number: WO 2016/093335

(56) References cited:
- WO-A1-2007/074595
- DE-A1- 2 359 852
- JP-A- 2001 234 995
- JP-A- 2001 234 995
- JP-A- 2004 332 822
- JP-A- 2005 140 309
- JP-U- S62 108 656
- US-A1- 2013 284 459

## Description

### TECHNICAL FIELD

The present invention relates to a friction roller type speed increaser according to the preamble of claim 1 and a friction roller type speed increaser according to the preamble of claim 5. Such friction roller type speed increasers are known from JP 2001-234 995 A.

### BACKGROUND ART

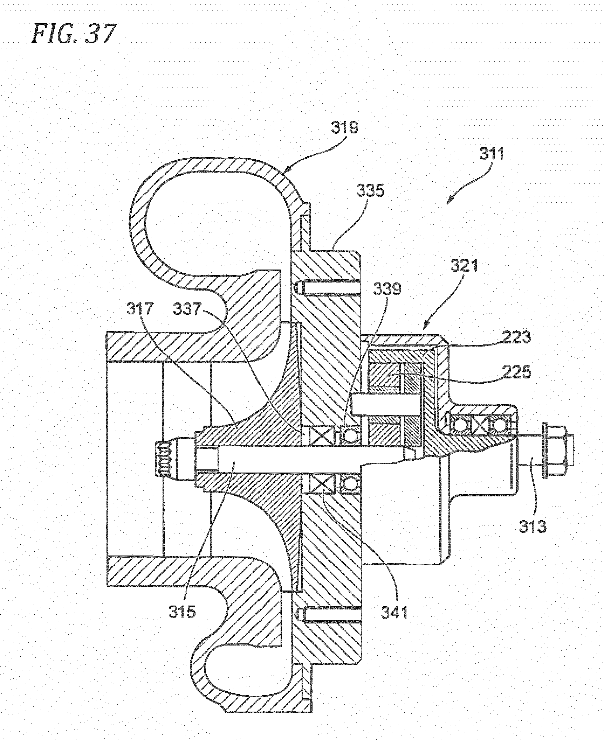

As one of friction roller type speed increasers, there is known a friction roller type speed increaser which uses a wedge roller. Fig. 37 illustrates an example of a supercharger into which a wedge roller type speed increaser is built (refer to Patent Document 1). A supercharger 311 increases the speed of motor rotation input to a low speed side shaft 313 and rotates a high speed side shaft 315. An impeller 317 which is connected to the high speed side shaft 315 rotates at a high speed so that air in a spiral pipe 319 is compressed.

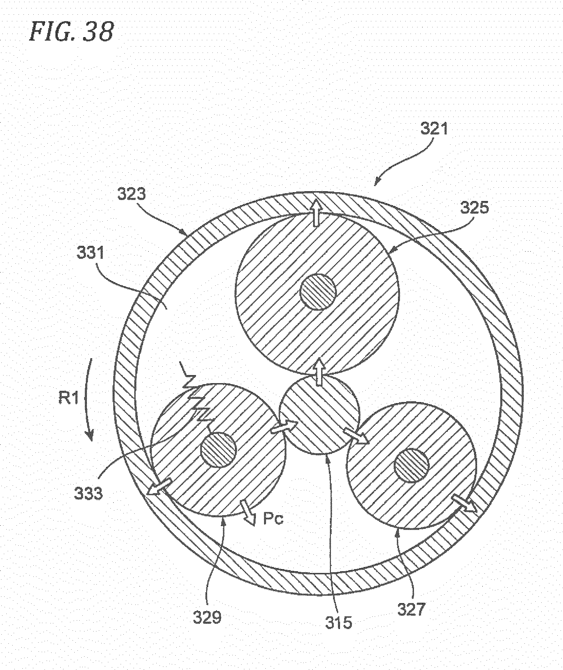

As illustrated in Fig. 38, a speed increaser 321 built into the supercharger 311 includes the high speed side shaft 315, a ring roller 323 which is rotatably disposed in the vicinity of the high speed side shaft 315 in a state where the rotational axis thereof is eccentric with respect to the rotational axis of the high speed side shaft 315, and two fixed rollers 325 and 327 and one movable roller 329 which are rotatably disposed between the high speed side shaft 315 and the ring roller 323. The ring roller 323 is connected to the low speed side shaft 313 (refer to Fig. 37) and is rotated integrally with the low speed side shaft 313 by a motor (not shown). Outer circumferential surfaces of the fixed rollers 325 and 327 and the movable roller 329 are in rolling contact with an inner circumferential surface of the ring roller 323 and an outer circumferential surface of the high speed side shaft 315, respectively. The movable roller 329 is a wedge roller which is supported in such a manner that slight displacement in a circumferential direction of an annular space 331 can be performed and the movable roller is elastically pressed by a spring 333 toward a region in the annular space 331 of which the radial width is small (an arrow Pc in Fig. 38). With the movable roller being pressed by the spring 333, a wedge effect in which the outer circumferential surface of the movable roller 329 presses the outer circumferential surface of the high speed side shaft 315 and the inner circumferential surface of the ring roller 323 occurs. Then, the pressing force toward the high speed side shaft 315 is transmitted to the two fixed rollers 325 and 327 and the contact surface pressure on the each roller is increased. In addition, when the low speed side shaft 313 is rotated and the ring roller 323 is rotated in a direction R1 in Fig. 38, a wedge effect similar to the above-described wedge effect in which the movable roller 329 is pressed in a direction Pc in Fig. 38 occurs.

In addition, in the speed increaser 321 having the above-described configuration, as illustrated in Fig. 37, the high speed side shaft 315 is rotatably supported in an insertion hole 337, which is formed on a center plate 335 of the supercharger, via a bearing 339. In addition, on the outside of the bearing 339 of the high speed side shaft 315 (the impeller 317 side), an oil seal 341 is disposed so as to prevent lubricating oil, which is supplied into the speed increaser 321, from leaking out.

However, in the speed increaser 321 having the above-described configuration, since the rotational shaft of the movable roller 329 moves corresponding to rotational torque input to the low speed side shaft 313, the high speed side shaft 315 is pressed in a radial direction corresponding to rotational torque to be transmitted. As a result of this, the high speed side shaft 315 becomes eccentric in the radial direction. Therefore, the oil seal 341 illustrated in Fig. 37 may be unevenly worn and a gap between the high speed side shaft 315 and the oil seal 341 may be generated although depending on operating conditions of the speed increaser 321. In this case, the lubricating oil may leak out via the gap.

Therefore, it is conceivable to increase the interference of the oil seal so as to prevent the gap between the high speed side shaft 315 and the oil seal 341 from being generated. However, when the interference is increased, friction on the oil seal and rotational torque of an output shaft are increased, which results in a disadvantage that the torque transmission efficiency of the speed increaser is decreased.

In addition, as friction roller type speed increasers using a wedge roller, for example, friction roller type speed increasers as described in Patent Documents 2 and 3 are known. In the friction roller type speed increaser, application of a pre-load to the wedge roller is performed by pressing the opposite ends of a roller supporting shaft or by directly pressing outer diameter surfaces of supporting bearings, which are disposed on the opposite side surfaces of the wedge roller, by using an elastic member.

In a case where the friction roller type speed increaser in Patent Document 2 is used for the purpose of high speed rotation, it is preferable that a ball bearing which is suitable for high speed rotation is used as a supporting shaft of the wedge roller instead of a needle bearing or a slide bearing. However, when the ball bearing is used, the volume occupied by the bearing in a carrier is increased in comparison with the needle bearing and the slide bearing. Therefore, there is a disadvantage that a space for disposing a pre-load spring becomes small.

In a friction roller type speed increaser which uses a wedge roller, each of contact surfaces between a fixed roller and a ring roller, contact surfaces between a wedge roller and the ring roller, contact surfaces between the fixed roller and a sun roller, and contact surfaces between the wedge roller and the sun roller is a traction surface for transmitting a dynamic force. When a circumferential speed is high, the temperature of traction oil is raised and thus a ratio (a traction coefficient) between a tangential force and a normal force which are transmitted via the traction surface is decreased. Even in a case where the traction oil is used as lubricating oil, the traction coefficient is decreased to approximately 0.06 to 0.08 when the circumferential speed is low being equal to or lower than 20 m/s and the traction coefficient is decreased to approximately 0.04 to 0.06 when the circumferential speed is high being higher than 30 m/s. That is, in a case where the speed increaser is rotated at a high speed, a larger pre-load needs to be applied.

Therefore, the friction roller type speed increaser used in a high speed rotation region needs a larger pre-load but there is a contradiction that a space, to which an elastic member that applies a pre-load can be attached, is small.

It is conceivable to use a smaller rigid spring having a large spring constant in order to solve such a problem. However, if a spring is designed to be rigid, although it is possible to obtain a sufficient pre-load with a small volume, it is necessary to install the rigid spring while compressing the rigid spring at a time of assembly of the speed increaser, which results in a significant decrease in assembling property.

In addition, as another configuration example of the friction roller type speed increaser, a configuration in Patent Document 3 which is illustrated in Fig. 39 is known. In this friction roller type speed increaser, an elastic member 351 that applies a pre-load presses a supporting shaft 357 of a wedge roller 355 via a pressing pin 353. In this case, since a top flat surface of the pressing pin 353 comes into sliding contact with a cylindrical surface of the supporting shaft 357 of the wedge roller, a portion of the flat surface and a portion of the cylindrical surface, with which both of the surfaces come into sliding contact with each other, come into line contact with each other and thus a problem such as wear is likely to occur in the case of long-time use. Such a problem also occurs in a configuration in Patent Document 2.

Furthermore, a traction drive transmission is known in which at least two rotators, each of which has a smooth surface, are strongly pressed and a dynamic force is transmitted with a lubricating oil film being interposed between the two rotators, unlike gear transmission (for example, refer to Patent Document 4).

Fig. 40 illustrates a section of a roller type transmission 360 which is disclosed in Patent Document 4. The roller type transmission 360 includes a low speed side shaft 361, an outer ring 363 which is connected to the low speed side shaft 361, a high speed side shaft 365, and a plurality of guide rollers 367 which are disposed between the outer ring 363 and the high speed side shaft 365.

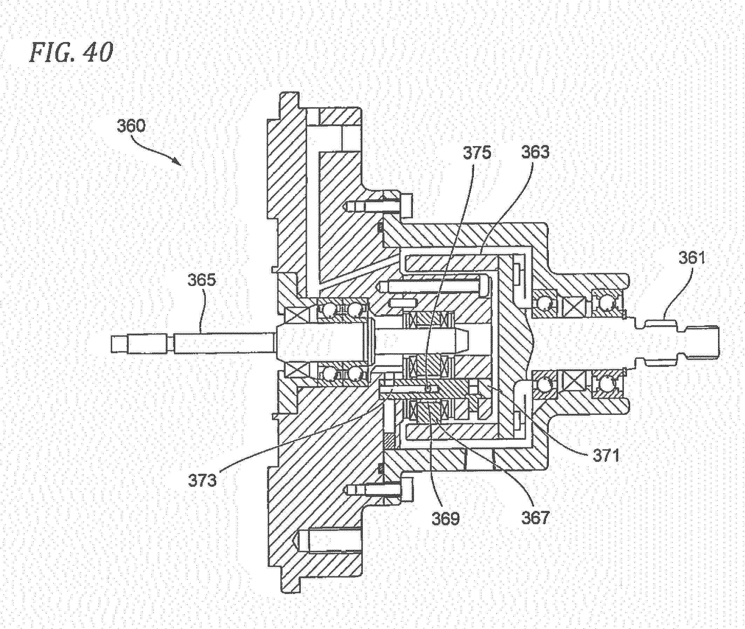

In the roller type transmission 360 having the above-described configuration, the plurality of guide rollers 367 are supported by a supporting shaft 371 via a needle bearing 369. For this reason, in order to supply lubricating oil to abutting surfaces between the supporting shaft 371 and the needle bearing 369, it is necessary to drill an oil hole 373 which extends from one end side (the left end side in Fig. 40) of the supporting shaft 371 to the longitudinal center portion of the supporting shaft 371. Furthermore, in the longitudinal center portion of the supporting shaft 371, an oil hole 375 for ejecting lubricating oil in the oil hole 373 to the needle bearing 369 is also drilled in a radial direction. According to this configuration, the stiffness of the one end side of the supporting shaft 371 is decreased and a stiffness balance which is required to stably support the rollers is likely to be lost. Particularly, in the case of the guide roller 367 on which a pressing force acts, if the stiffness balance of the supporting shaft 371 is deteriorated, a traction force fluctuates. When the traction force fluctuates, the dynamic force transmission efficiency of the roller type transmission 360 may be decreased.

As disclosed in Patent Documents 1, 5, and the like, in a wedge roller speed increaser, a low speed shaft is on the input side and a high speed shaft is on the output side. The wedge roller speed increaser is suitable for, for example, an air compressor or the like. In an air compressor which uses the wedge roller speed increaser, a rotational force of a prime mover such as a motor or the like is input to the low speed shaft and an impeller fixed to the high speed shaft is rotated in a spiral pipe so that air is compressed.

The wedge roller speed increaser is configured to include a sun roller which is coupled to the high speed shaft, a ring roller which is disposed to be eccentric with respect to the sun roller and is coupled to the low speed shaft, and intermediate rollers (a fixed roller and a movable roller) which are disposed in an annular space between the sun roller and the ring roller. The movable roller is elastically pressed by a spring toward a region in the annular space of which the radial width is small and due to the pressing, a wedge effect in which an outer circumferential surface of the sun roller and an inner circumferential surface of the ring roller are pressed occurs. In the wedge roller speed increaser, a pressing force proportional to a transmission torque can be obtained at each of contact surfaces between the ring roller, the intermediate rollers, and the sun roller by using the wedge effect. As a result, a slide at the time of high speed rotation and driving loss at the time of low speed rotation do not occur.

However, since the high speed shaft of the wedge roller speed increaser is rotated at a very high speed (for example, the maximum rotation speed is 130,000 rpm), if there is asymmetry with respect to the rotational center or mass distribution is not uniform, the shaft vibrates and a bearing may be worn or destroyed early. Therefore, the high speed shaft needs to be subject to balance correction corresponding to a target rotation speed region. The balance correction is performed by rotating a single high speed shaft and cutting a shaft body or adding a weight to the shaft such that measured imbalance is eliminated. Meanwhile, in the case of a high speed shaft supporting structure in the related art, it is necessary to install a large number of components (a seal housing, a collar, a spacer, and the like) in a small space and a machined surface for the balance correction is small. In addition, since the high speed shaft is disposed with the machined surface for the balance correction being biased to the sun roller side, there is a problem that the balance correction cannot be performed sufficiently.

In addition, the friction roller type speed increaser in Patent Document 2 is used in the field of, for example, an electric wheel driving device since size reduction and noise reduction can be achieved.

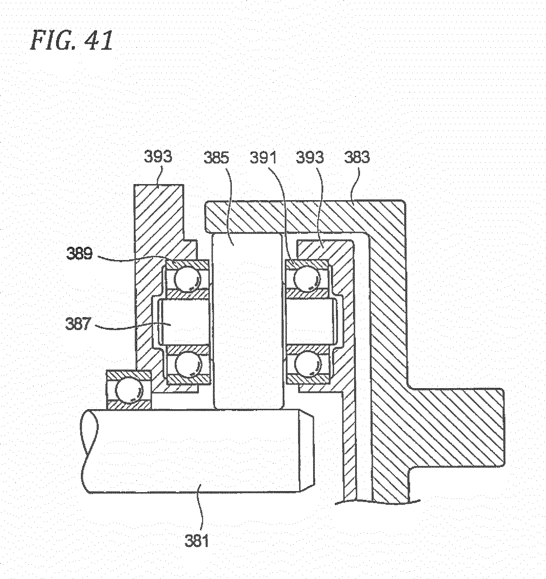

A friction roller type transmission of which a main portion is schematically illustrated in Fig. 41 includes a high speed side shaft 381, a ring roller 383, and rollers 385 as described above. The ring roller 383 is rotatably disposed in the vicinity of the high speed side shaft 381 in a state where the rotational axis thereof is eccentric with respect to the rotational axis of the high speed side shaft 381. The rollers 385 are rotatably disposed between the high speed side shaft 381 and the ring roller 383. Note that, only one roller is illustrated in Fig. 41.

In the friction roller type transmission having the above-described configuration, the opposite ends of a supporting shaft 387 of each roller 385 is fixed to a housing 393 via bearings 389 and 391. Therefore, in order to install the rollers 385 in the housing 393, it is necessary to perform fixation while adjusting an axial gap between the rollers 385 and the bearings 389 and 391 and thus an operation of assembling the roller 385 becomes complicated. In addition, the supporting shaft 387 is configured to support each roller 385 in a radial direction and in a case where a strong axial force is applied to the rollers 385, it is difficult to stably support the rollers 385.

In addition, a sufficient amount of lubricating oil which is supplied to the rollers 385 from a lubricating oil supply path (not shown) formed in the housing 393 is supplied to the ring roller 383. However, it is difficult to effectively supply the lubricating oil to rolling elements of the bearings 389 and 391.

### RELATED ART REFERENCE

### PATENT DOCUMENT

[Patent Document 1] JP-A-2003-201850
[Patent Document 2] JP-A-2003-184976
[Patent Document 3] JP-A-2004-332822
[Patent Document 4] JP-A-2004-169762
[Patent Document 5] JP-A-2003-301906

### SUMMARY OF THE INVENTION

### PROBLEMS TO BE SOLVED BY THE INVENTION

The invention has been made in consideration of the above circumstance, and an object thereof is to solve a problem in a friction roller type speed increaser of the related art and to provide a friction roller type speed increaser that enables high speed rotation.

### MEANS FOR SOLVING THE PROBLEMS

As a solution, the present invention proposes a friction roller type speed increaser with the features of claim 1, wherein preferred embodiments thereof are defined in the dependent claims 2 - 4, and a friction roller type speed increaser with the features of claim 5.

### ADVANTAGES OF THE INVENTION

According to the friction roller type speed increaser of the invention, even when a shaft which rotates at a high speed becomes eccentric, it is possible to secure an excellent sealing property of the sealing member without a decrease in torque transmission efficiency.

According to the friction roller type speed increaser of the invention, it is possible to apply a high pre-load without wear of a component for applying a pre-load and a decrease in assembling property. Therefore, the friction roller type speed increaser can be configured to be suitable for being used in a high speed rotation region.

According to the friction roller type speed increaser of the invention, it is possible to perform lubrication without a decrease in stiffness balance of the supporting shaft and it is possible to secure high dynamic force transmission efficiency while stabilizing a traction force.

According to the friction roller type speed increaser of the invention, it is possible to rotate the high speed shaft at high accuracy and to achieve vibration reduction and improvement in bearing life while maintaining a feature of the related art that, even when a shaft becomes eccentric, it is possible to maintain an excellent sealing property and an interference can be set to be small.

### BRIEF DESCRIPTION OF THE DRAWINGS

Fig. 1 is a view for explaining an embodiment of the invention and is a sectional view illustrating a friction roller type speed increaser in a first configuration example.
Fig. 2 is a sectional arrow view taken along line A-A in Fig. 1.
Fig. 3 is a sectional view of a bearing unit.
Fig. 4 is an exploded perspective view of the bearing unit.
Fig. 5 is an explanatory view illustrating how the bearing unit disposed in a unit accommodating section is displaced.
Fig. 6 is a sectional view of a friction roller type speed increaser in a second configuration example.
Fig. 7 is a sectional view of a bearing unit and a high speed side shaft.
Fig. 8 is an exploded perspective view of the bearing unit and the high speed side shaft.
Fig. 9(A) is a partial enlarged sectional view illustrating the state of a cylindrical collar and a coil spring pertaining to a state where an impeller rotates at a low speed and Fig. 9(B) is a partial enlarged sectional view illustrating the state of the cylindrical collar and the coil spring pertaining to a state where an impeller rotates at a high speed.
Fig. 10 is an arrow view illustrating a main portion in a section taken along line A-A in Fig. 1.
Fig. 11 is a sectional arrow view illustrating a section of the friction roller type speed increaser taken along line B-B in Fig. 10.
Fig. 12 is a sectional view of a movable roller unit.
Fig. 13 is an exploded perspective view of the movable roller unit.
Fig. 14 is a sectional view illustrating a state where the movable roller unit is temporarily retained.
Fig. 15 is a sectional view of a friction roller type speed increaser.
Fig. 16 is a sectional arrow view taken along line C-C in Fig. 15.
Fig. 17 is a sectional arrow view taken along line D-D in Fig. 16.
Fig. 18(A) is a sectional view of a friction roller type speed increaser having a speed increasing ratio of 10 which is taken along a plane orthogonal to a high speed side shaft and Fig. 18(B) is a sectional view of a friction roller type speed increaser having a speed increasing ratio of 6 which is taken along a plane orthogonal to a high speed side shaft.
Fig. 19 is an enlarged sectional view illustrating the vicinity of a supporting shaft in the friction roller type speed increaser illustrated in Fig. 15.
Fig. 20 is a sectional view illustrating an embodiment of a friction roller type speed increaser.
Fig. 21 is a sectional view of an output shaft unit.
Fig. 22 is an exploded perspective view of the output shaft unit.
Fig. 23 is a sectional view illustrating a main portion of an output shaft unit according to a reference example.
Fig. 24 is a sectional view of the friction roller type speed increaser in the first configuration example.
Fig. 25 is a front view of a large-diameter fixed roller.
Fig. 26 is a sectional view of the large-diameter fixed roller illustrated in Fig. 25 which is taken along line E-E.
Fig. 27 is a sectional view illustrating a state where the large-diameter fixed roller is fixed to a center plate.
Fig. 28 is a sectional view of a fixed roller bearing which includes a plurality of rows of ball bearings in the second configuration example.
Fig. 29 is a sectional view of a friction roller type speed increaser in a third configuration example which illustrates a section taken along line F-F in Fig. 2.
Fig. 30 is a side view of a large-diameter roller built into a speed increaser as seen from an axial impeller side.
Fig. 31 is a sectional view taken along line G-G in Fig. 30.
Fig. 32 is a side view of a wedge roller built into the speed increaser as seen from an axial direction.
Fig. 33 is a sectional view taken along line H-H in Fig. 32.
Fig. 34 is a sectional view of a large-diameter fixed roller in a fourth configuration example.
Fig. 35 is a sectional view of a wedge roller in a fifth configuration example.
Fig. 36 is a sectional view of a large-diameter fixed roller in a sixth configuration example.
Fig. 37 is a partial sectional view illustrating a configuration of a supercharger in the related art.
Fig. 38 is a sectional view schematically illustrating a configuration of a speed increaser in the related art.

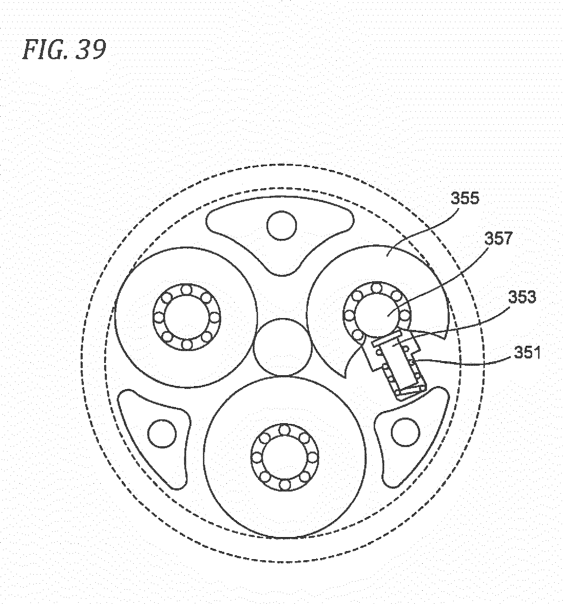

Fig. 39 is a plan view illustrating a configuration of a main portion of a friction roller type speed increaser in the related art.
Fig. 40 is a sectional view of a roller type transmission in the related art.
Fig. 41 is a sectional view illustrating a configuration of a main portion of a friction roller type transmission in the related art.

### MODES FOR CARRYING OUT THE INVENTION

Hereinafter, embodiments of the invention will be described in detail with reference to drawings.

### <First Configuration Example>

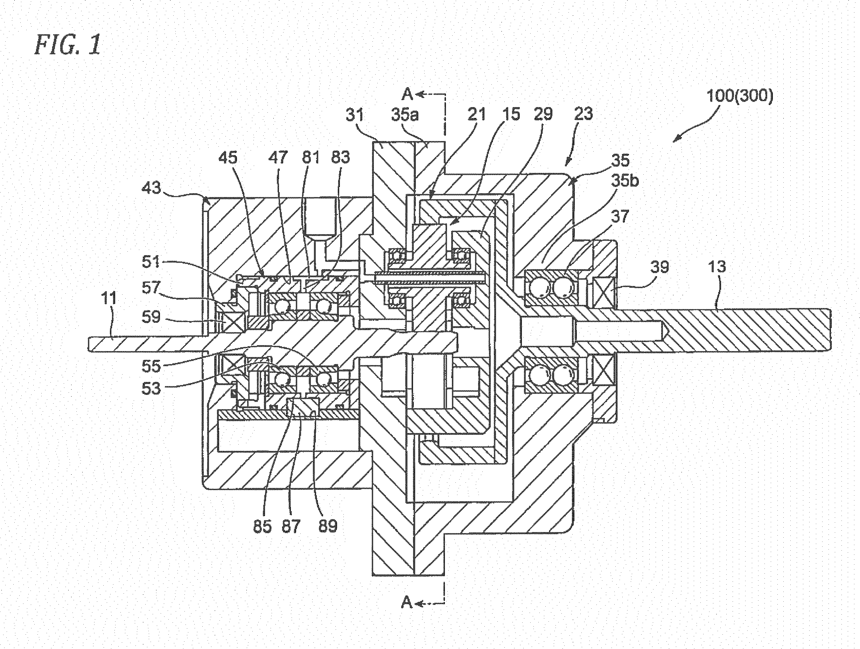

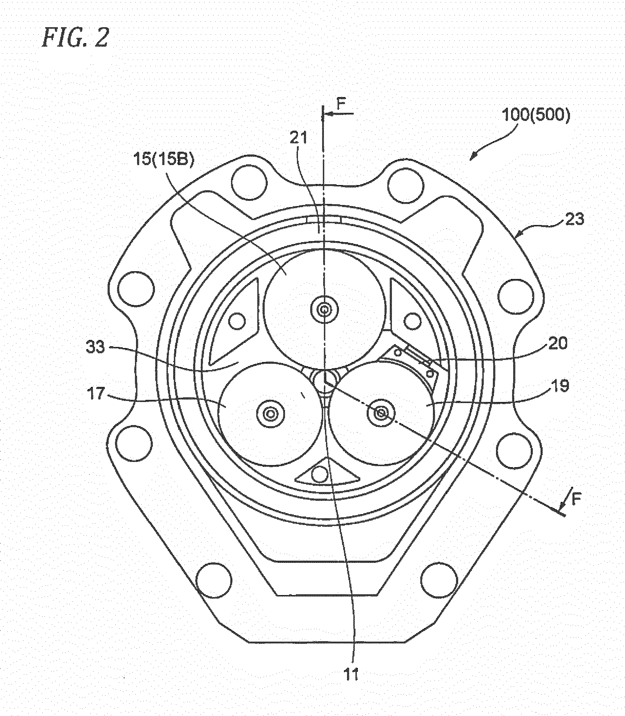

Fig. 1 is a view for explaining an embodiment of the invention and is a sectional view illustrating a friction roller type speed increaser in a first configuration example and Fig. 2 is a sectional arrow view taken along line A-A in Fig. 1. The friction roller type speed increaser of this configuration can be applied to apparatuses requiring particularly high speed rotation, examples of which include a type of compressor in which the speed of a rotational force of a prime mover (a motor) is increased and air is compressed by using an impeller disposed in a spiral pipe.

As described in Figs. 1 and 2, a friction roller type speed increaser (hereinafter, abbreviated to a speed increaser) 100 includes a high speed side shaft 11 which is an output shaft, a low speed side shaft 13 which is an input shaft disposed to be parallel with the high speed side shaft 11, a large-diameter fixed roller 15 which is a fixed roller, a small-diameter fixed roller 17, a wedge roller 19 which is a movable roller, and a ring roller 21. A housing 23, into which lubricating oil is supplied, surrounds the rollers 15, 17, and 19.

One end portion of the low speed side shaft 13 which is connected to the prime mover is concentrically coupled to the ring roller 21 and the low speed side shaft 13 transmits a rotational force from the prime mover to the ring roller 21. The ring roller 21 is disposed to be eccentric with respect to the rotational axis of the high speed side shaft 11 and is rotated integrally with the low speed side shaft 13 such that the ring roller can be rotated relative to the high speed side shaft 11.

An impeller in a spiral pipe (not shown), for example, is fixed to the high speed side shaft 11 and the impeller is rotated so that air is compressed.

As illustrated in Fig. 2, the large-diameter fixed roller 15, the small-diameter fixed roller 17, and the wedge roller 19 are provided between the ring roller 21 and the high speed side shaft 11. The large-diameter fixed roller 15, the small-diameter fixed roller 17, and the wedge roller 19 are rotatably supported between a carrier 29 and a center plate 31 illustrated in Fig. 1 in a state where respective outer circumferential surfaces thereof abut onto an outer circumferential surface of the high speed side shaft 11 and an inner circumferential surface of the ring roller 21.

The wedge roller 19 is disposed in a region in an annular space 33 formed between the ring roller 21 and the high speed side shaft 11, of which the width dimension in a radial direction is small. In addition, the wedge roller 19 is supported to be capable of being displaced in a direction in which the width dimension decreases and is pressed and urged by a pressing unit 20 in a direction in which the width dimension decreases.

The low speed side shaft 13 illustrated in Fig. 1 is supported by a bowl-shaped low speed shaft housing 35 via a bearing 37. A bowl-shaped front end portion 35a of the low speed shaft housing 35 is fixed to the center plate 31 via a bolt (not shown) and a base end 35b of the low speed shaft housing is connected to the outer ring of the bearing 37 which supports the low speed side shaft 13 with the inner ring thereof.

An oil seal 39 is attached to an outer portion in the axial direction (in the following description, the axial direction of the high speed side shaft 11 and the low speed side shaft 13 will be simply called the axial direction) of the base end 35b of the low speed shaft housing 35 while being interposed between the base end 35b and the low speed side shaft 13.

A high speed shaft housing 43 is fixed to a portion of the center plate 31 which is opposite to a portion of the center plate 31 to which the low speed shaft housing 35 is fixed. The high speed shaft housing 43 and the above-described center plate 31 and low speed shaft housing 35 are integrated with each other to form the housing 23 that surrounds the rollers 15, 17, and 19.

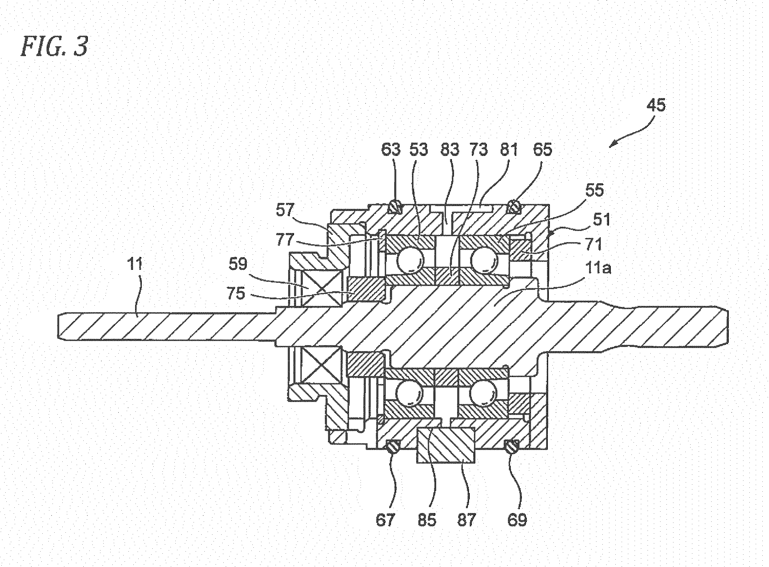

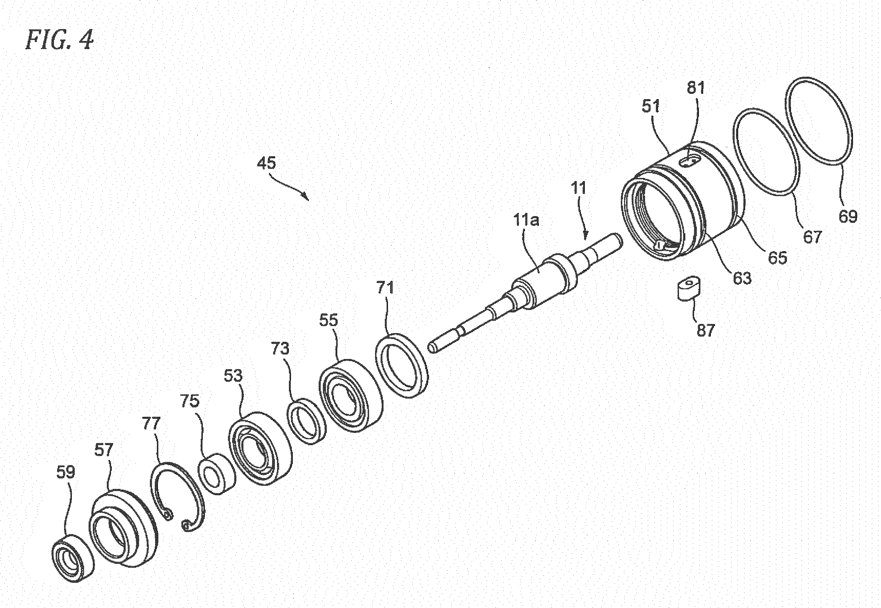

In the high speed shaft housing 43, a unit accommodating section 47 that accommodates a bearing unit 45 is formed. Fig. 3 is a sectional view of the bearing unit 45 and Fig. 4 is an exploded perspective view of the bearing unit 45. In the bearing unit 45, the high speed side shaft 11 is inserted into a cylindrical bearing housing 51 and a large-diameter portion 11a, which is an axial intermediate portion of the high speed side shaft 11, is rotatably supported.

The bearing unit 45 includes the bearing housing 51, bearings 53 and 55 which are disposed between an inner circumferential portion of the bearing housing 51 and the large-diameter portion 11a of the high speed side shaft 11, and a seal housing 57 which is press-fitted into one axial end portion of the bearing housing 51.

An oil seal 59 as a scaling member is fitted into one end portion of the seal housing 57 and when the high speed side shaft 11 is inserted through the oil seal 59, the inner space of the bearing housing 51 including the bearings 53 and 55 is closed. In addition, on an outer circumferential surface of the bearing housing 51, annular groves 63 and 65 are formed and O-rings 67 and 69 are mounted on the annular groves 63 and 65, respectively.

More specifically, in the bearing unit 45, a pre-load spring 71, the bearing 55, a spacer 73, the bearing 53, a collar 75, a retaining ring 77, the seal housing 57, and the oil seal 59 are arranged in this order from the other axial end portion of the bearing housing 51 (the right side in Fig. 3).

On the large-diameter portion 11a of the high speed side shaft 11, the bearings 53 and 55 are disposed to interpose the spacer 73 and lubricating oil is supplied to the bearings 53 and 55 from the radial outside of a position at which the spacer 73 is disposed. The inner rings of the bearings 53 and 55 are fixed in the axial direction by the collar 75 and the pre-load spring 71 which is disposed on one side in the axial direction (the right side in Fig. 3) applies an appropriate pre-load to the bearings 53 and 55. In addition, on the other side in the axial direction, the retaining ring 77 abuts onto the outer ring of the bearing 53 and thus the bearings 53 and 55 are fixed to the bearing housing 51 with a pre-load being applied to both of the bearings 53 and 55.

On an outer circumferential portion of the bearing housing 51, a recess groove 81 via which lubricating oil is supplied to the bearings 53 and 55 and a through hole 83 in the recess groove 81 through which the outer circumferential surface and the inner circumferential surface communicate with each other are formed. The recess groove 81 and the through hole 83 are formed in a region between the annular groves 63 and 65 which extends in the axial direction of the bearing housing 51. Since the recess groove 81 and the through hole 83 are disposed between the O-rings 67 and 69, it is possible to prevent lubricating oil from leaking out.

In addition, a key groove 85 is formed on the bearing housing 51 and a key 87 for preventing rotation is engaged with the key groove 85. In addition, on the inner circumferential portion of the unit accommodating section 47 formed in the high speed shaft housing 43, a cut-out portion 89 (refer to Fig. 1) is formed on a position corresponding to the key groove 85. Since the key 87 is engaged with the key groove 85 and the cut-out portion 89, it is possible to prevent the bearing unit 45 from rotating together with the high speed side shaft 11.

According to the speed increaser 100 having the above-described configuration, the bearing unit 45 is accommodated with the O-rings 67 and 69, which protrude from the outer circumferential surface of the bearing unit 45, being in contact with the unit accommodating section 47 of the high speed shaft housing 43. Therefore, the bearing unit 45 is supported such that the bearing unit 45 can be moved in the radial direction relative to the unit accommodating section 47 by a distance corresponding to the squeeze of the O-rings 67 and 69. That is, the bearing unit 45 is floating-supported in the unit accommodating section 47.

According to the configuration, even in a case where the rotational shaft of the wedge roller 19 is moved corresponding to rotational torque input to the low speed side shaft 13 and the high speed side shaft 11 becomes eccentric in the radial direction, the O-rings 67 and 69 are elastically deformed. Accordingly, the eccentricity of the high speed side shaft 11 is absorbed. In addition, since the oil seal 59 moves in accordance with the movement of the high speed side shaft 11, the oil seal 59 is not squashed by the high speed side shaft 11 and the oil seal 59 is not unevenly worn.

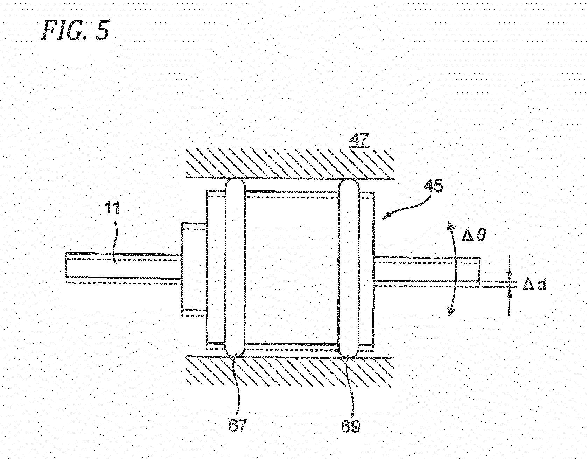

Fig. 5 schematically illustrates how the bearing unit 45 disposed in the unit accommodating section 47 is displaced. Regarding the bearing unit 45, since the O-rings 67 and 69 are squashed in a case where the high speed side shaft 11 becomes eccentric, the high speed side shaft 11 is allowed to be displaced in the radial direction by Δd. In addition, since the high speed side shaft 11 is supported by two or more O-rings which are provided on the outer circumferential portion of the bearing unit 45 while being separated from each other in the axial direction, inclination in a direction Δθ in Fig. 5 is not likely to occur.

In the actual speed increaser 100, a radial movement amount of the high speed side shaft 11 is about 50 µm and a gap between the unit accommodating section 47 and the bearing unit 45 is about 250 µm. Therefore, a gap between the outer circumferential surface of the bearing unit 45 and the unit accommodating section 47 is sufficiently larger than the eccentricity amount of the high speed side shaft 11 and thus it is possible to reliably absorb the eccentricity of the high speed side shaft 11. Therefore, even in a case where the high speed side shaft 11 becomes eccentric, it is possible to maintain a high sealing property with the oil seal 59. In addition, the interference of the oil seal 59 can be set small.

Since the interference of the oil seal 59 can be set small, rotational torque loss of the high speed side shaft 11 is suppressed and it is possible to suppress a decrease in speed transmission efficiency of the speed increaser 100. In addition, the oil seal 59 is not displaced relative to the high speed side shaft 11 in the radial direction even when the high speed side shaft 11 becomes eccentric and thus the seal is not unevenly worn and lubricating oil does not leak out.

### <Second Configuration Example>

Next, a second configuration example of the friction roller type speed increaser will be described. The speed increaser of this configuration is configured using a mechanical seal with small friction torque as a seal which is attached to an output shaft.

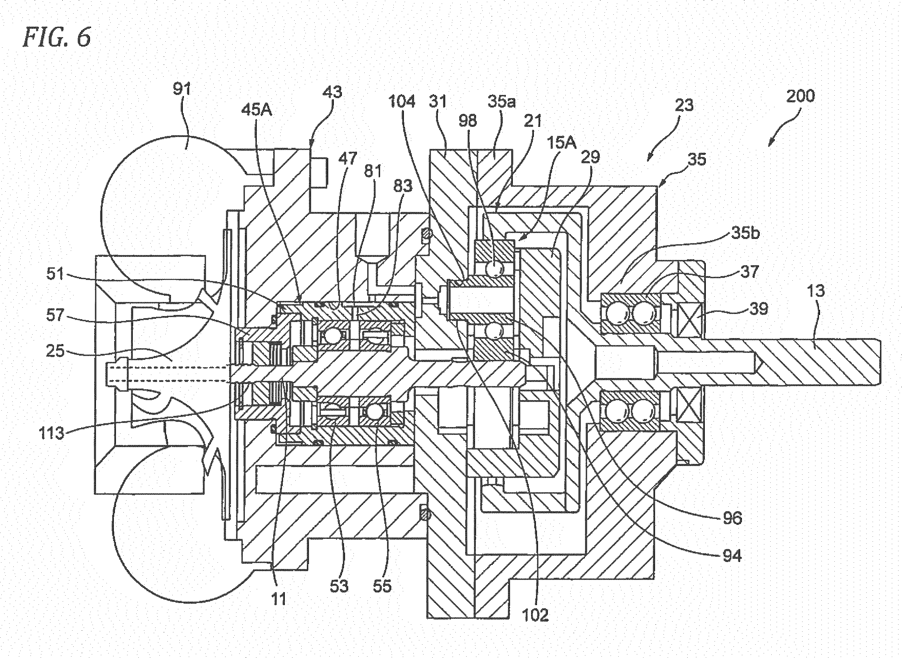

Fig. 6 is a sectional view of a friction roller type speed increaser according to the second configuration example to which an impeller 25 and a spiral pipe 91 are attached. Note that, in the following description, the same components are given the same reference numerals and description thereof will be simplified or omitted.

As with the speed increaser 100 in the first configuration example, a speed increaser 200 is used for a type of compressor in which, the speed of a rotational force of a prime mover (a motor) is increased and air is compressed by using the impeller 25 disposed in the spiral pipe 91.

The speed increaser 200 includes the high speed side shaft 11, the low speed side shaft 13, a large-diameter fixed roller 15A similar to that in the above description, a small-diameter fixed roller (not shown), a wedge roller (not shown), and the ring roller 21. The housing 23, into which lubricating oil is supplied, surrounds the friction rollers including the large-diameter fixed roller 15A.

The large-diameter fixed roller 15A in this configuration includes an outer ring 94, an inner ring 96, and a rolling element 98. Regarding the large-diameter fixed roller 15A, a protrusion 102 which is formed on one axial end side of the inner ring 96 is press-fitted into an insertion hole 104 which is formed in the center plate 31. According to the configuration, the large-diameter fixed roller 15A is cantilever-supported by the center plate 31 and thus it is possible to reduce the number of components and to improve an assembling property in comparison with a case where the large-diameter fixed roller 15A is supported at both ends.

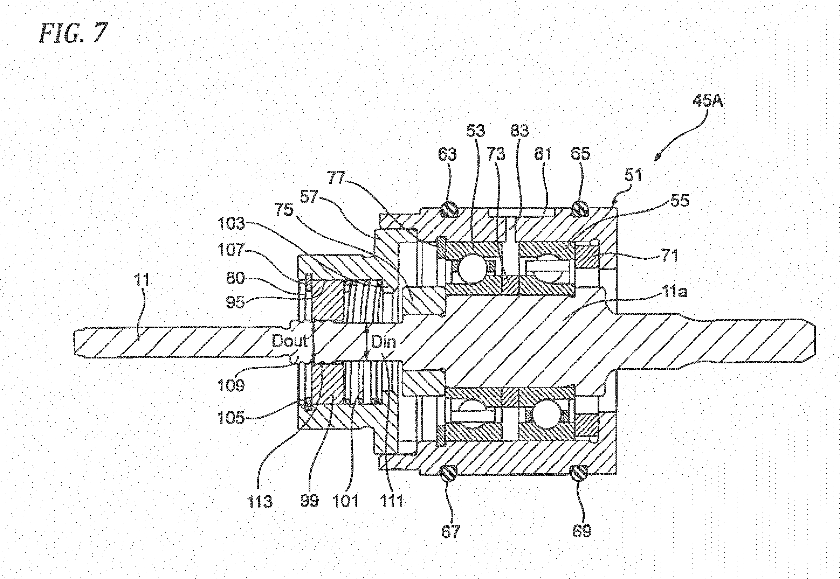

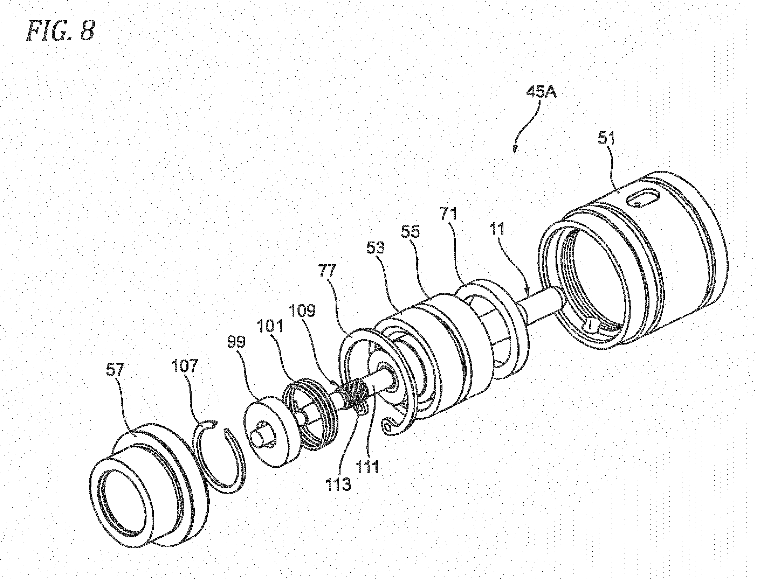

In the high speed shaft housing 43, the unit accommodating section 47 in which a bearing unit 45A is accommodated is formed. Fig. 7 is a sectional view of the bearing unit 45A and the high speed side shaft 11 and Fig. 8 is an exploded perspective view of the bearing unit 45A and the high speed side shaft 11. As illustrated in Fig. 7, the bearing unit 45A in this configuration includes the mechanical seal on a side at which the impeller is fixed to the high speed side shaft 11 (the left side in Fig. 7).

Hereinafter, the configuration of the mechanical seal will be described.

The seal housing 57 is fixed to an end portion of the bearing housing 51 on the impeller 25 side (refer to Fig. 6). As illustrated in Fig. 7, an annular space 80 between an inner diameter surface 95 of the seal housing 57 and the high speed side shaft 11 communicates with a space in the spiral pipe 91 which is on the impeller side illustrated in Fig. 6.

On the inside of the inner diameter surface 95 of the seal housing 57, a cylindrical collar 99 and a coil spring 101 which is an elastic member are arranged in this order from the impeller side with the high speed side shaft 11 being inserted therethrough. The outer diameters of the cylindrical collar 99 and the coil spring 101 are approximately equal to or slightly smaller than the diameter of the inner diameter surface 95 of the seal housing 57.

In addition, in the seal housing 57, a projection 103 that protrudes radially inward is formed on an end portion of the inner diameter surface 95 which is opposite to the impeller side. One axial end portion of the coil spring 101 abuts onto the projection 103 and the other axial end portion of the coil spring 101 abuts onto an end surface of the cylindrical collar 99 which is opposite to the impeller side. Therefore, the coil spring 101 urges the cylindrical collar 99 toward the impeller side.

Furthermore, in the seal housing 57, a ring groove 105 is formed on a portion of the inner diameter surface 95 which is positioned slightly further inside than an impeller side end portion in the axial direction. In the ring groove 105, a retaining ring 107 is accommodated. The retaining ring 107 abuts onto an impeller side end surface of the cylindrical collar 99 and functions as a retainer of the cylindrical collar 99.

The high speed side shaft 11 includes a large-diameter portion 109 with a relatively large diameter and a small-diameter portion 111 with a relatively small diameter, of which outer diameter surfaces are different in diameter, in a region in which the high speed side shaft 11 is inserted into the seal housing 57. The diameter Dout of the large-diameter portion 109 is substantially equal to the inner diameter of the cylindrical collar 99 and the diameter Din of the small-diameter portion 111 is smaller than the diameter Dout of the large-diameter portion 109.

In addition, at least one spiral groove 113 is formed on the outer diameter surface of the large-diameter portion 109. The spiral groove 113 is formed to be twisted in such a direction that air in the spiral pipe 91 is drawn to the bearing unit 45A side from a rear surface of the impeller 25 in response to rotation of the impeller 25 illustrated in Fig. 6.

Next, an operation of the mechanical seal in the above-described configuration will be described.

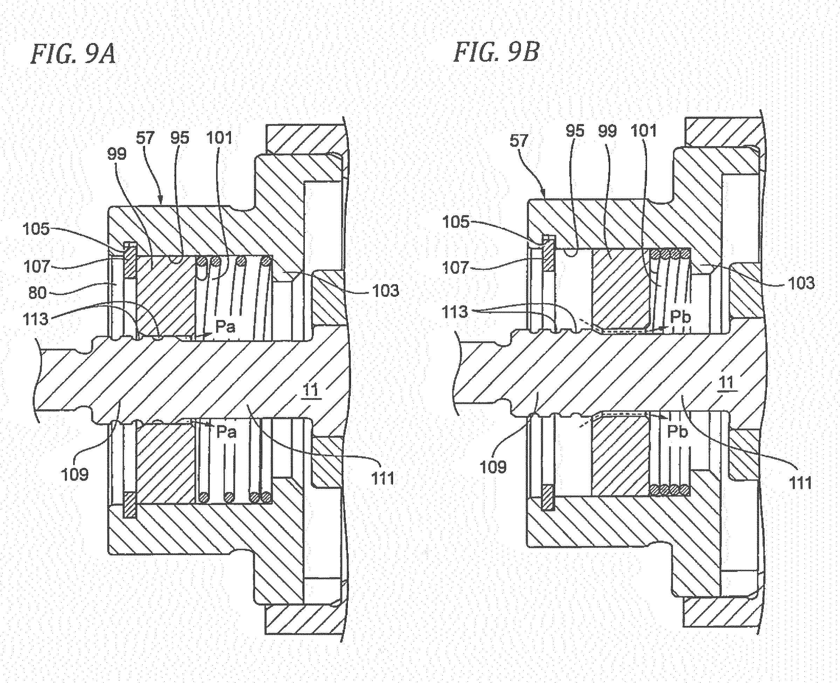

Fig. 9(A) is a partial enlarged sectional view illustrating the state of the cylindrical collar 99 and the coil spring 101 pertaining to a state where the impeller rotates at a low speed. In this state, since the compressor pressure is small, the elastic repulsion force of the coil spring 101 is larger than a force which air in the spiral pipe applies on an impeller side end surface of the cylindrical collar 99. Therefore, the cylindrical collar 99 is urged by the coil spring 101 toward the impeller side. As a result, the cylindrical collar 99 is disposed at an axial position in which the cylindrical collar 99 abuts onto the retaining ring 107, that is, a position on the large-diameter portion 109 of the high speed side shaft 11.

A clearance between the inner diameter surface of the cylindrical collar 99 and the outer diameter surface of the high speed side shaft 11 in this case is set to be significantly small and thus the degree of fitting becomes medium. Therefore, lubricating oil does not leak out toward the impeller side. In addition, friction torque between the cylindrical collar 99 and the high speed side shaft 11 tends to increase since the clearance is small. However, since the rotation speed of the high speed side shaft 11 is in a state of being low, friction loss (power loss), which is obtained when multiplying friction torque by the rotation speed, becomes low.

In addition, in this case, if the high speed side shaft 11 rotates, air is drawn to the bearing unit 45A side from the impeller side via the spiral groove 113 formed on the cylindrical collar 99 (refer to a dotted line Pa in Fig. 9(A)). Due to the pumping effect, it is possible to prevent lubricating oil from leaking out to the impeller side at the time of low speed rotation.

Fig. 9(B) is a partial enlarged sectional view illustrating the state of the cylindrical collar 99 and the coil spring 101 pertaining to a state where the impeller rotates at a high speed. In this state, the compressor pressure becomes high and becomes larger than the elastic repulsion force of the coil spring 101 so that the cylindrical collar 99 is urged toward a side opposite to the impeller.

At this time, the cylindrical collar 99 moves to the position of the small-diameter portion 111 of the high speed side shaft 11. Therefore, the clearance between the inner diameter surface of the cylindrical collar 99 and the outer diameter surface of the high speed side shaft 11 becomes large and friction between both of the inner diameter surface and the outer diameter surface barely occurs except for viscous friction with air. In addition, even in a case where the clearance is large, the annular space 80 in the seal housing 57 communicates with the spiral pipe on the impeller side and is in a high-pressure state. Therefore, air is drawn to the bearing unit 45A side from the impeller side via the clearance (refer to Pb in Fig. 9(B)). Due to the air flow, it is possible to prevent lubricating oil from leaking out to the impeller side.

As described above, according to the oil seal in this configuration, regardless of whether the high speed side shaft 11 is rotated at a low speed or is rotated at a high speed, it is possible to lower the friction resistance and to reliably prevent lubricating oil from leaking out.

Meanwhile, in a case where the oil seal is a contact type seal, the sealing member comes into contact with the high speed side shaft 11 at all times. Therefore, regardless of whether the high speed side shaft 11 is rotated or not, it is possible to effectively prevent lubricating oil from leaking out. However, in the contact type seal, since the sealing member comes into contact with the high speed side shaft 11 at all times, the friction resistance becomes large. Particularly, in a case where the speed increaser is used for an air compressor, the maximum rotation speed of high speed side shaft 11 may reach approximately 130,000 rpm (13,613 rad/s).

In this case, even if friction torque generated on a contact portion of the sealing member has a small value of, for example, approximately 0.2 Nm, the friction loss which is obtained when multiplying the friction torque by the rotation speed becomes significantly high being approximately 2.7 kW.

According to the speed increaser 200 including the mechanical seal in this configuration, it is possible to suppress friction loss and to efficiently transmit a dynamic force even at the time of high speed rotation as described above.

### <Third Configuration Example>

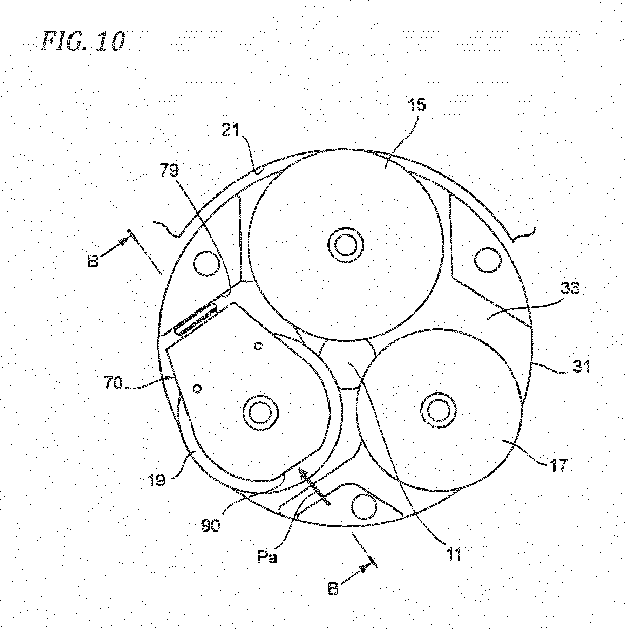

A sectional view of a friction roller type speed increaser (a speed increaser) in this configuration example is the same as Fig. 1 described above and thus is omitted. Fig. 10 is a sectional arrow view taken along line A-A in Fig. 1. A speed increaser 300 of this configuration can be applied to apparatuses requiring particularly high speed rotation, examples of which include a type of compressor in which the speed of a rotational force of a prime mover (a motor) is increased and air is compressed by using an impeller disposed in a spiral pipe.

As described in Figs. 1 and 10, the speed increaser 300 includes the high speed side shaft 11 which is an output shaft, the low speed side shaft 13 which is an input shaft disposed to be parallel with the high speed side shaft 11, the large-diameter fixed roller 15 which is a fixed roller, the small-diameter fixed roller 17, the wedge roller 19 which is a movable roller, and the ring roller 21. The housing 23, into which lubricating oil is supplied, surrounds the rollers 15, 17, and 19.

One end portion of the low speed side shaft 13 which is connected to the prime mover is concentrically coupled to the ring roller 21 and the low speed side shaft 13 transmits a rotational force from the prime mover to the ring roller 21. The ring roller 21 is disposed to be eccentric with respect to the rotational axis of the high speed side shaft 11 and is rotated integrally with the low speed side shaft 13 such that the ring roller can be rotated relative to the high speed side shaft 11.

An impeller in a spiral pipe (not shown), for example, is fixed to the high speed side shaft 11 and the impeller is rotated so that air is compressed.

The large-diameter fixed roller 15, the small-diameter fixed roller 17, and the wedge roller 19 are provided between the ring roller 21 and the high speed side shaft 11. The large-diameter fixed roller 15, the small-diameter fixed roller 17, and the wedge roller 19 are rotatably supported between the carrier 29 and the center plate 31 in a state where respective outer circumferential surfaces thereof abut onto the outer circumferential surface of the high speed side shaft 11 and the inner circumferential surface of the ring roller 21.

The large-diameter fixed roller 15 and the small-diameter fixed roller 17 are pivotally supported by the carrier 29 and the center plate 31 which are roller supporting members, the wedge roller 19 is supported by a movable roller unit which will be described later in detail, and the movable roller unit is supported by the carrier 29.

As illustrated in Fig. 10, the wedge roller 19 is disposed in a region in the annular space 33 formed between the ring roller 21 and the high speed side shaft 11, of which the width dimension in the radial direction is small. In addition, the wedge roller 19 is supported to be capable of being displaced in a direction (a direction opposite to an arrow Pa on line B-B) in which the width dimension decreases and is pressed and urged by a pre-load spring in a direction in which the width dimension decreases.

The low speed side shaft 13 illustrated in Fig. 1 is supported by the bowl-shaped low speed shaft housing 35 via the bearing 37. The bowl-shaped front end portion 35a of the low speed shaft housing 35 is fixed to the center plate 31 via a bolt (not shown) and the base end 35b of the low speed shaft housing is connected to the outer ring of the bearing 37 which supports the low speed side shaft 13 with the inner ring thereof.

The oil seal 39 is attached to an outer portion in the axial direction of the base end 35b of the low speed shaft housing 35 while being interposed between the base end 35b and the low speed side shaft 13.

The high speed shaft housing 43 is fixed to a portion of the center plate 31 which is opposite to a portion of the center plate 31 to which the low speed shaft housing 35 is fixed. The high speed shaft housing 43 and the above-described center plate 31 and low speed shaft housing 35 are integrated with each other to form the housing 23 that surrounds the rollers 15, 17, and 19.

The high speed side shaft 11 is rotatably supported by the bearings 53 and 55 in the high speed shaft housing 43.

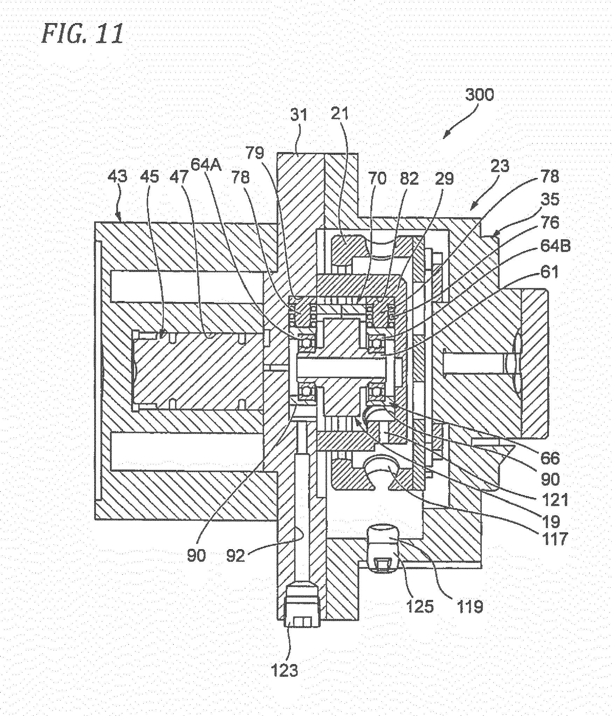

Next, a configuration of the wedge roller 19 will be described. Fig. 11 is a sectional arrow view illustrating a section of the friction roller type speed increaser taken along line B-B in Fig. 10.

The wedge roller 19 is supported by a movable roller unit 70 that is obtained by integrating the wedge roller 19, a pair of bearings 64A and 64B rotatably supporting the opposite ends of a supporting shaft 61 of the wedge roller 19, and a roller holder 66 holding the pair of bearings 64A and 64B with each other.

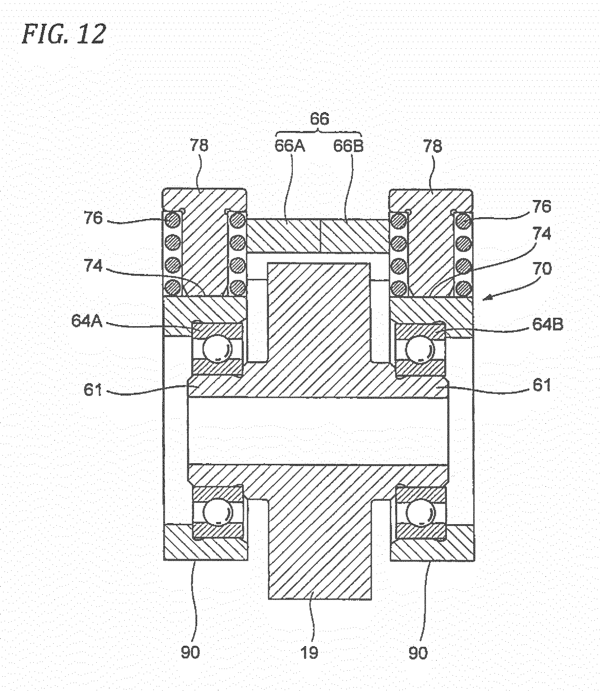

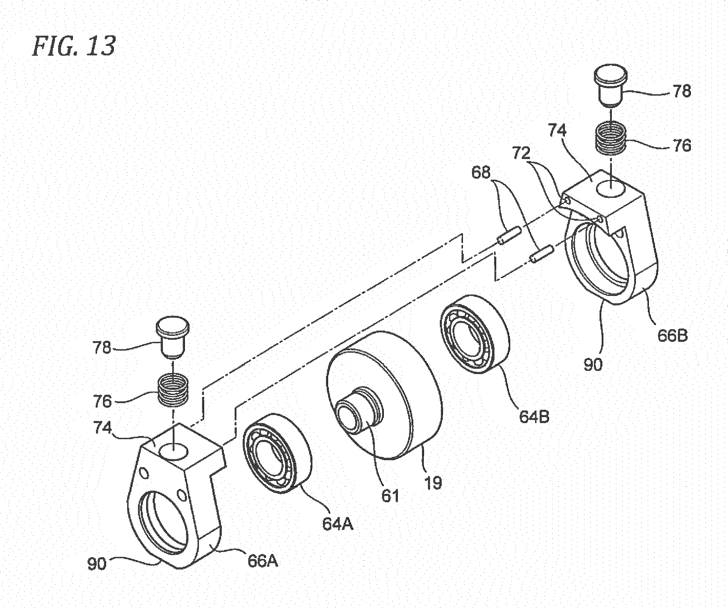

Fig. 12 is a sectional view of the movable roller unit 70 and Fig. 13 is an exploded perspective view of the movable roller unit. The roller holder 66 of the movable roller unit 70 is divided into two parts and the roller holder 66 includes a division holder 66A and a division holder 66B.

The wedge roller 19 and the bearings 64A and 64B are interposed between a pair of division holders 66A and 66B. The division holders 66A and 66B are connected to each other and are integrated with the wedge roller 19 and the bearings 64A and 64B when knock pins 68 as connecting members are press-fitted into pin holes 72 which are respectively formed on the division holders 66A and 66B.

The movable roller unit 70 includes a flat portion 74 which is one radial end portion of the roller holder 66. On the flat portion 74, a coil-shaped pre-load spring 76 which is an elastic member and a pressing rod 78 which is inserted into a coil of the pre-load spring 76 are disposed.

As illustrated in Figs. 10 and 11, the movable roller unit 70 is accommodated between the center plate 31 and the carrier 29 in a state where the pressing rod 78 abuts onto an inner wall surface 79 of the center plate 31 and an inner wall surface 82 of the carrier 29.

The movable roller unit 70 is urged in a direction along line B-B in Fig. 10, that is, in a direction in which the width dimension in a radial direction of the annular space 33 decreases while receiving an elastic restoring force of the pre-load spring 76 in a state where one end of the pressing rod 78 abuts onto the center plate 31 and the carrier 29.

Since the movable roller unit 70 is urged by the pre-load spring 76, the contact surface pressure between the wedge roller 19 and the high speed side shaft 11 and the contact surface pressure between the wedge roller 19 and the ring roller 21 (refer to Fig. 1) are increased. Furthermore, the contact surface pressure between the wedge roller 19 and the high speed side shaft 11 is transmitted to the ring roller 21 via the large-diameter fixed roller 15 and the small-diameter fixed roller 17. Accordingly, the pre-load spring 76 increases the contact surface pressure between the rollers 15, 17, and 19 and suppresses the occurrence of a slide between the rollers.

According to this configuration, the roller holder 66 integrally accommodates the wedge roller 19 and the bearings 64A and 64B and a pre-load is applied to the wedge roller 19 with the pre-load spring 76 pressing the outer surface of the roller holder 66. Therefore, a pressing force from the pre-load spring 76 is applied to the flat portion 74 of the roller holder 66 instead of a sliding surface such as the supporting shaft 61 of the wedge roller 19. Therefore, a problem due to wear does not occur in a component for applying a pre-load even in the case of long-time use.

Next, an installing process in which the movable roller unit 70 is disposed at a predetermined position of the center plate 31 and the carrier 29 will be described. As described above, in a case where the friction roller type speed increaser 300 is rotated at a high speed, it is preferable that the spring constant of the pre-load spring 76 is set to be high. However, in this case, it is necessary to build the pre-load spring 76 into the speed increaser while compressing the pre-load spring 76, which results in a disadvantage that the installing process becomes complicated.

Therefore, in the friction roller type speed increaser 300 in this configuration, the movable roller unit 70 is supported such that a pressing surface 90 on the other radial end portion of the roller holder 66, which is opposite to the one radial end portion of the roller holder 66 onto which the pre-load spring 76 abuts, can be pressed.

As illustrated in Fig. 11, when the integrally assembled movable roller unit 70 is installed on a predetermined position of the center plate 31 and the low speed shaft housing 35, a state where the pressing surface 90 of the roller holder 66 is pressed is maintained. That is, the entire movable roller unit 70 is temporarily retained at a predetermined position with the pre-load spring 76 being compressed.

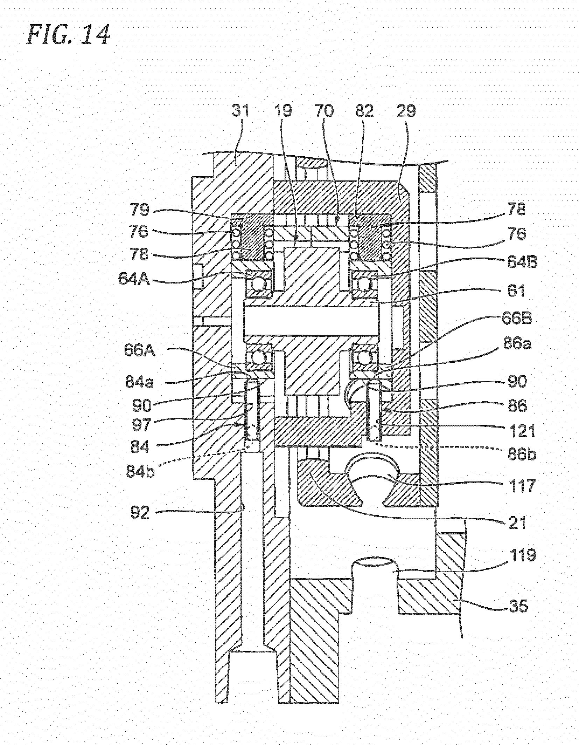

Fig. 14 is an enlarged sectional view illustrating a main portion in Fig. 11 pertaining to a state where the movable roller unit 70 is temporarily retained. In this configuration, retaining screws 84 and 86 as temporary retaining members are used to press the pressing surface 90 of the roller holder 66 toward the pre-load spring 76.

The retaining screws 84 and 86 are holed retaining screws that include pointed portions as front end portions 84a and 86a, hexagonal holes 84b and 86b as rear end portions, and male screws which are formed on outer circumferential portions.

A through hole 92 through which the retaining screw 84 is inserted and a female screw portion 97 into which the outer circumferential portion of the retaining screw 84 is screwed are formed on the center plate 31. Through holes 117 and 119 through which the retaining screw 86 is inserted are formed on the ring roller 21 and the low speed shaft housing 35 and a female screw portion 121 into which the outer circumferential portion of the retaining screw 86 is screwed is formed on the carrier 29.

The retaining screw 84 is inserted into the through hole 92 formed on the center plate 31 and is screwed into the female screw portion 97 with a hexagonal wrench (not shown) being installed in the hexagonal hole 84b. Then, the hexagonal wrench is operated so that the retaining screw 84 is pushed forward in the female screw portion 97 until the front end portion 84a of the retaining screw 84 abuts onto the pressing surface 90 of the division holder 66A of the roller holder 66.

Similarly, the retaining screw 86 is inserted into the through holes 117 and 119 of the low speed shaft housing 35 and the ring roller 21 and is screwed into the female screw portion 121. Then, the hexagonal wrench is operated so that the retaining screw 86 is pushed forward in the female screw portion 121 until the front end portion 86a abuts onto the pressing surface 90 of the division holder 66B of the roller holder 66.

When the retaining screw 84 is screwed into the female screw portion 97, the pressing surface 90 of the division holder 66A is pressed in the radial direction. In addition, when the retaining screw 86 is screwed into the female screw portion 121, the pressing surface 90 of the division holder 66B is pressed in the radial direction. With the radial pressing force (refer to the arrow Pa in Fig. 10), it is possible to compress the pre-load springs 76 and 76.

The screwing-in amount of the retaining screws 84 and 86 is adjusted to a position at which the wedge roller 19, the ring roller 21, and the high speed side shaft 11 do not come into contact with each other. Then, all of the components are installed with the pre-load spring 76 being compressed.

When the retaining screws 84 and 86 are removed from the female screw portions 97 and 121 after the installation is finished, due to a spring force of the pre-load spring 76, an appropriate normal force is applied to the rollers 15, 17, 19, and 21 and the high speed side shaft 11.

After the retaining screws 84 and 86 are removed, as illustrated in Fig. 11, plugs 123 and 125 are fitted into the through holes 92 and 119. With the plugs 123 and 125, the through holes 92 and 119 are air tightly sealed.

Next, an operation of the above-described configuration will be described.

According to the friction roller type speed increaser 300 in this configuration, the wedge roller 19 and the bearings 64A and 64B, with which the supporting shaft 61 of the wedge roller is provided, are integrally accommodated in the roller holder 66 and a pre-load is applied to the entire roller holder 66 by the pre-load spring 76. Therefore, a component for applying a pre-load has no sliding surface and a problem such as wear does not occur even in the case of long-time use.

In addition, since the wedge roller 19 and the bearings 64A and 64B are installed after being integrated with the roller holder 66, assembly becomes significant easy in comparison with a method of installing the wedge roller 19, the bearings 64A and 64B, the pre-load spring 76, and the like individually.

Furthermore, since each unit in the speed increaser is assembled in a state where the pre-load spring 76 has been compressed by using the retaining screws 84 and 86, the assembling property does not decrease. Therefore, the more rigid spring can be adopted and it is possible to easily achieve a strong pre-load suitable for use in a high speed region. In addition, if the more rigid spring is used, the installation space of a spring can be small and a large-diameter bearing which is further suitable for high speed rotation can be used.

In the movable roller unit 70, the pre-load springs 76 are provided corresponding to the disposition positions of the bearings 64A and 64B. Therefore, a pre-load can be applied to the movable roller unit 70 in a well-balanced manner. As a result, it is possible to apply a uniform pressing force to a traction surface of the wedge roller 19 and to stably maintain an excellent contact state.

In addition, since the wedge roller 19 moves corresponding to torque to be transmitted, wear is likely to occur between the roller holder 66, the carrier 29, and the center plate 31. Therefore, it is preferable that a hard material is used for at least one of the roller holder 66, the carrier 29, and the center plate 31. For example, a hard layer may be formed on a surface of the roller holder 66 by performing a heat treatment on the roller holder 66 which is formed of a steel material or the carrier 29, and the center plate 31 may be formed of light metal such as aluminum.

In a case where a soft material such as aluminum is used for the roller holder 66, it is preferable that a surface is covered with a hard film such that wear of a sliding surface is not likely to occur. Examples of the hard film include a film which is obtained by depositing tin, which is excellent in self-lubricating property, in a hole of a hard film with countless fine holes and of which a surface chemically adsorbs fine PTFE particles.

Note that, regarding the wedge roller 19 in this configuration, the opposite ends of the supporting shaft 61 are pressed by the pair of pre-load springs 76. However, a configuration in which the axial center of the wedge roller 19 is pressed by one spring may also be adopted.

### <Fourth Configuration Example>

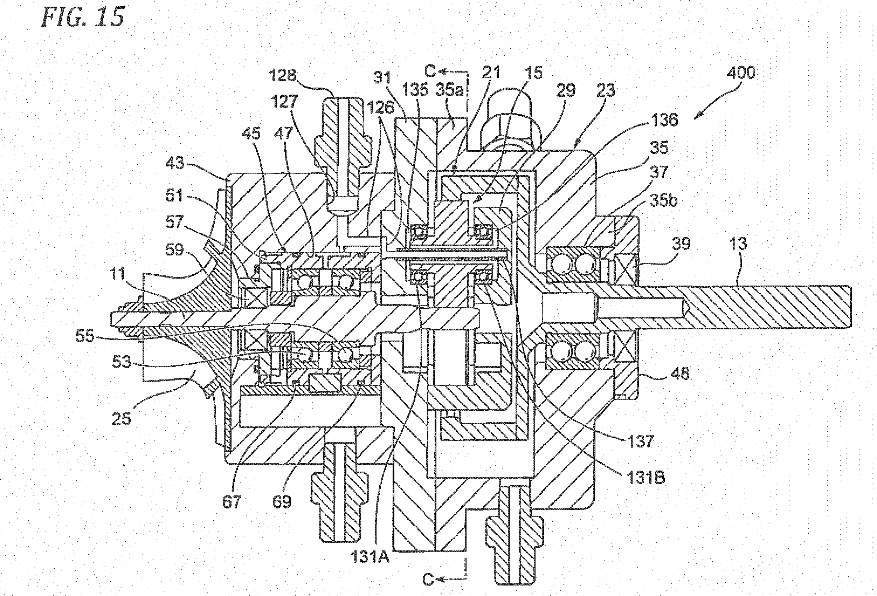

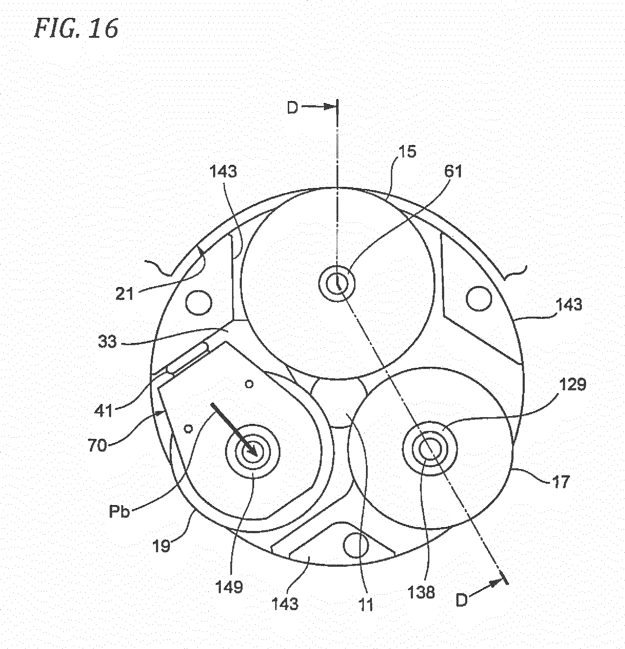

Fig. 15 is a sectional view of a friction roller type speed increaser (a speed increaser) in a fourth configuration example and Fig. 16 is a sectional arrow view taken along line C-C in Fig. 15.

A speed increaser 400 in this configuration includes the high speed side shaft 11 which is an output shaft, the low speed side shaft 13 which is an input shaft disposed to be parallel with the high speed side shaft 11, the large-diameter fixed roller 15, the small-diameter fixed roller 17 (refer to Fig. 16), the wedge roller 19 (refer to Fig. 2) which is a movable roller, and the ring roller 21. The large-diameter fixed roller 15, the small-diameter fixed roller 17, and the wedge roller 19 are disposed in the housing 23. The housing 23 is air tightly closed and lubricating oil is supplied thereinto.

One end portion of the low speed side shaft 13 which is connected to a motor (not shown) or the like, which is the prime mover, is concentrically coupled to the ring roller 21 and the low speed side shaft 13 transmits a rotational force from the prime mover to the ring roller 21. The ring roller 21 is disposed to be eccentric with respect to the rotational axis of the high speed side shaft 11 and is rotated integrally with the low speed side shaft 13 such that the ring roller can be rotated relative to the high speed side shaft 11.

An impeller 25 in a spiral pipe (not shown), for example, is fixed to the high speed side shaft 11 and the impeller 25 is rotated so that air is compressed.

The large-diameter fixed roller 15, the small-diameter fixed roller 17, and the wedge roller 19 are provided between the ring roller 21 and the high speed side shaft 11. The large-diameter fixed roller 15, the small-diameter fixed roller 17, and the wedge roller 19 are rotatably and pivotally supported between the carrier 29 and the center plate 31 in a state where respective outer circumferential surfaces thereof abut onto the outer circumferential surface of the high speed side shaft 11 and the inner circumferential surface of the ring roller 21.

As illustrated in Fig. 16, the wedge roller 19 is disposed in a region in the annular space 33 formed between the ring roller 21 and the high speed side shaft 11, of which the width dimension in the radial direction is small. In addition, the wedge roller 19 is supported to be capable of being displaced in a direction in which the width dimension decreases and is pressed and urged by a pressing unit 41 in a direction (a direction along an arrow Pb in Fig. 16) in which the width dimension decreases.

The low speed side shaft 13 illustrated in Fig. 15 is supported by the low speed shaft housing 35 via the bearing 37. The bowl-shaped front end portion 35a of the low speed shaft housing 35 is fixed to the center plate 31 and the base end 35b of the low speed shaft housing is connected to the outer ring of the bearing 37 which supports the low speed side shaft 13.

An input side seal housing 48, which fixes the oil seal 39 to a position between the base end 35b and the low speed side shaft 13, is attached to an outer portion in the axial direction of the base end 35b of the low speed shaft housing 35.

The high speed shaft housing 43 is fixed to a portion of the center plate 31 which is opposite to a portion of the center plate 31 to which the low speed shaft housing 35 is fixed. The high speed shaft housing 43 and the above-described center plate 31 and low speed shaft housing 35 are integrated with each other to form the housing 23 that surrounds the rollers 15, 17, 19 and 21.

In the high speed shaft housing 43, the bearing unit 45 which rotatably supports the high speed side shaft 11 is accommodated in the unit accommodating section 47. The bearing unit 45 supports the large-diameter portion, which is the axial intermediate portion of the high speed side shaft 11, and is configured to have a cylindrical shape as a whole.

The bearing unit 45 includes the cylindrical bearing housing 51, bearings 53 and 55 which are disposed between the inner circumferential surface of the bearing housing 51 and the outer circumferential surface of the large-diameter portion of the high speed side shaft 11, and the seal housing 57 which is press-fitted into one axial end portion of the bearing housing 51 and into which the oil seal 59 is fitted. With the oil seal 59 of the seal housing 57, the inner space of the bearing housing 51 is air tightly closed. In addition, the O-rings 67 and 69 are mounted on the outer circumferential surface of the bearing housing 51.

The large-diameter fixed roller 15 and the small-diameter fixed roller 17 are rotatably supported between the carrier 29 and the center plate 31 via respective rolling bearings. Lubricating oil supply paths 126 (refer to Fig. 15) to which lubricating oil is supplied are formed in both of the high speed shaft housing 43 and the center plate 31 which is a fixed roller supporting member.

Lubricating oil is supplied to the lubricating oil supply path 126 from a lubricating oil supply pipe connector 128 which is connected to a lubricating oil supply port 127 provided on the outer surface of the high speed shaft housing 43. Lubricating oil which has passed through the lubricating oil supply path 126 of the high speed shaft housing 43 flows into the lubricating oil supply path 126 of the center plate 31.

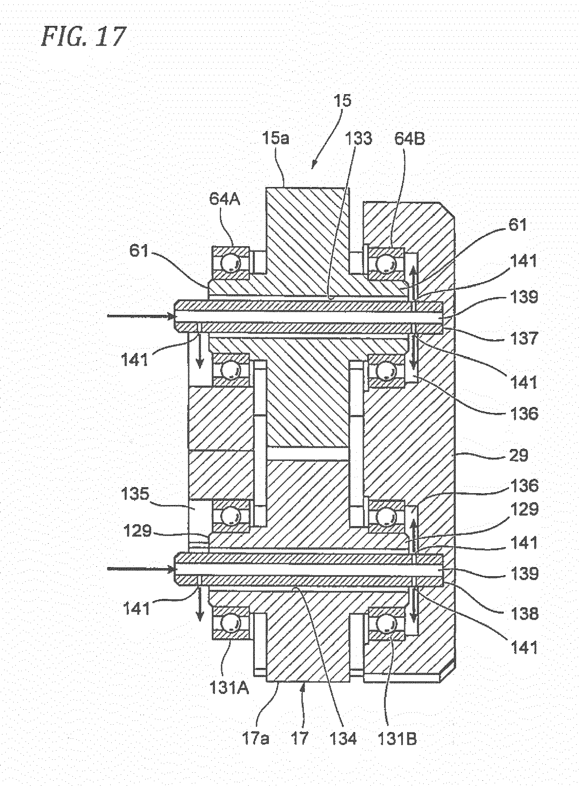

Fig. 17 is a sectional arrow view taken along line D-D in Fig. 16. The supporting shafts 61 are formed to protrude in a direction along the rotational axis from the opposite ends of the large-diameter fixed roller 15 and supporting shafts 129 are formed to protrude in a direction along the rotational axis from the opposite ends of the small-diameter fixed roller 17. A roller main body 15a of the large-diameter fixed roller 15 and the supporting shaft 61 are concentrically disposed with the rotational axis as the center thereof and a roller main body 17a of the small-diameter fixed roller 17 and the supporting shaft 129 are concentrically disposed with the rotational axis as the center thereof.

Regarding the large-diameter fixed roller 15, one of a pair of the supporting shafts 61 is supported by the center plate 31 (refer to Fig. 15) via the rolling bearing 64A and the other of the pair of the supporting shafts 61 is supported by the carrier 29 via the rolling bearing 64B.

In addition, regarding the small-diameter fixed roller 17, one of a pair of the supporting shafts 129 is supported by the center plate 31 (refer to Fig. 15) via a rolling bearing 131A and the other of the pair of the supporting shafts 129 is supported by the carrier 29 via a rolling bearing 131B. Hollow holes 133 and 134 which have the same sectional shape are formed in the supporting shafts 61 and 129 while penetrating the supporting shafts 61 and 129 along the respective rotational axes thereof. The sectional shape of each of the hollow holes 133 and 134 is an annular shape of which the center is positioned at the same position as the rotational axis.

The hollow holes 133 and 134 which penetrate the supporting shafts 61 and 129 open at end surfaces of the supporting shafts 61 and 129. One of end surfaces of each of the supporting shafts 61 and 129 opens into a lubricating oil supply gap 135 which is formed between the one end surface and the center plate 31. In addition, the other of the end surfaces opens into a lubricating oil supply gap 136 which is formed between the other end surface and the carrier 29. Side surfaces of the rolling bearings 64A, 64B, 131A, and 131B, which support the supporting shafts 61 and 129 of the respective rollers, are exposed to the lubricating oil supply gap 135 and the lubricating oil supply gap 136. That is, a rolling element (a ball) is exposed via a gap between the inner and outer rings of each of the rolling bearings 64A, 64B, 131A, and 131B.

Hollow pipes 137 and 138 are inserted into the hollow holes 133 and 134 of the large-diameter fixed roller 15 and the small-diameter fixed roller 17. Each of the hollow pipes 137 and 138 is a straight pipe of which the axial section has an annular shape.

The hollow pipes 137 and 138 do not come into contact with the inner surfaces of the hollow holes 133 and 134 which are drilled in the supporting shafts 61 and 129 and the roller main bodies 15a and 17a. That is, the large-diameter fixed roller 15 and the small-diameter fixed roller 17 rotate without interfering with the hollow pipes 137 and 138.

The opposite ends of the hollow pipes 137 and 138 respectively protrude from the supporting shafts 61 and 129 and one of the opposite ends is press-fitted into the center plate 31 (refer to Fig. 1) and the other of the opposite ends is inserted into a concave portion of the carrier 29.

A pipe inner space 139 of the one end of each of the hollow pipes 137 and 138, which is inserted into the center plate 31, communicates with the lubricating oil supply path 126 (refer to Fig. 15) formed in the center plate 31. Note that, the other end of each of the hollow pipes 137 and 138 is inserted into the concave portion of the carrier 29. In the concave portion of the carrier 29, a groove portion (not shown) is formed and the groove portion forms a flow path via which lubricating oil is supplied to the rotational shaft of the wedge roller 19 (refer to Fig. 16).

A lubricating oil ejecting port 141 is drilled on at least a portion of a side surface of each of the hollow pipes 137 and 138. That is, lubricating oil is introduced into the pipe inner space 139 via the lubricating oil supply path 126 (refer to Fig. 1) and is ejected via the lubricating oil ejecting port 141.

In this configuration example, the lubricating oil ejecting port 141 opens into each of the lubricating oil supply gap 135 which is formed in the center plate 31 and the lubricating oil supply gap 136 which is formed in the carrier 29.

The cross sectional area of a lubricating oil ejecting port 141 on a distal end side (the lubricating oil supply gap 136 side which is formed in the carrier 29), which is opposite to a connection end side (the lubricating oil supply gap 135 side which is formed in the center plate 31) of each of the hollow pipes 137 and 138 to which the lubricating oil supply path 126 is connected, is larger than the cross sectional area of a lubricating oil ejecting port 141 on the connection end side.

The magnitude relationship between the cross sectional areas may be set by changing the number of lubricating oil ejecting ports 141 having the same opening area. That is, as with this configuration example, the number of lubricating oil ejecting ports 141 having the same opening area may be set to one for the connection end and the number of lubricating oil ejecting ports 141 having the same opening area may be set to two for the connection end. In addition, the magnitude relationship between the cross sectional areas of the lubricating oil ejecting ports 141 may be set by changing the opening areas of the lubricating oil ejecting ports 141 without changing the number of the lubricating oil ejecting ports 141.

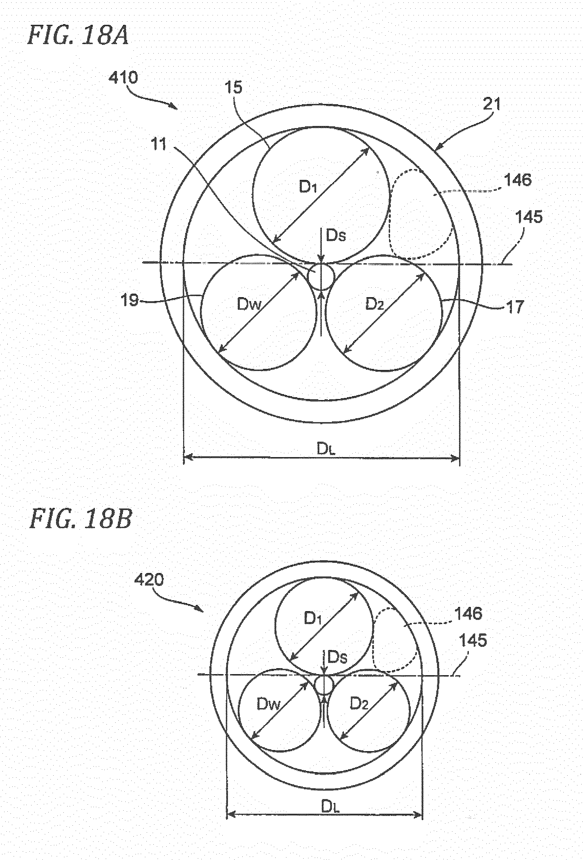

Fig. 18(A) is a sectional view of a speed increaser having a speed increasing ratio of 10 which is taken along a plane orthogonal to a high speed side shaft and Fig. 18(B) is a sectional view of a speed increaser having a speed increasing ratio of 6 which is taken along a plane orthogonal to a high speed side shaft.

In the speed increaser 400 in this configuration example, the speed increasing ratio between the low speed side shaft 13 and the high speed side shaft 11 is 10. In order to increase the speed increasing ratio, it is necessary to increase the ratio between an inner diameter DL of the ring roller 21 and an outer diameter Ds of the high speed side shaft 11, as illustrated in Fig. 18(A).

In a case where the speed increasing ratio is set to be large, the ratio of each of an outer diameter D1 of the large-diameter fixed roller 15, an outer diameter D2 of the small-diameter fixed roller 17, and an outer diameter Dw of the wedge roller 19 to the inner diameter DL of the ring roller 21 becomes large in comparison with a case where the speed increasing ratio is small (the speed increasing ratio is 6) as illustrated in Fig. 18(B).

As understood from Figs. 18(A) and 18(B), in a speed increaser 410 with a large speed increasing ratio, the area in which a carrier bridge 143 (refer to Fig. 16) can be disposed is relatively small. For example, it can be understood that, in the speed increaser 410 illustrated in Fig. 18(A) which has a speed increasing ratio of 10, a portion of the small-diameter fixed roller 17 and a portion of the wedge roller 19 protrude upward from a horizontal virtual line 145 which is a tangent between the high speed side shaft 11 and the large-diameter fixed roller 15 and a disposition area 146 in which the carrier bridge 143 can be disposed is relatively smaller than the disposition area 146 in a speed increaser 420 illustrated in Fig. 18(B) which has a speed increasing ratio of 6.

Table 1 is the result of comparison between the roller outer diameters D1, D2, and Dw in the speed increasers 410 and 420 having a speed increasing ratio according to this configuration example and the roller outer diameters D1, D2, and Dw in the speed increaser having a speed increasing ratio according to a comparative example, which is performed while standardizing the outer diameter Ds of each high speed side shaft to 1.

**[Table 1]**

| Speed increasing ratio | High speed side shaft Ds | Ring roller DL | Large-diameter fixed roller D1 | Small-diameter fixed roller D2 | Wedge roller Dw |
|---|---|---|---|---|---|
| 10 | 1 | 10 | 4.963 | 4.241 | 4.241 |
| 6 | 1 | 6 | 2.802 | 2.322 | 2.322 |

As understood from Table 1, in the speed increaser 410 having a large speed increasing ratio, the ratio of each of the outer diameters D1, D2, and Dw of three rollers which are the large-diameter fixed roller 15, the small-diameter fixed roller 17, and the wedge roller 19 to the ring roller inner diameter DL is large.

In a case where the wedge roller 19 is rotated at a high speed, it is necessary to supply appropriate lubricating oil to the traction surface and the rolling bearings 64A, 64B, 131A, and 131B for the purpose of lubrication and cooling. Particularly, in a case where the rotation speed of the output shaft exceeds tens of thousands of RPM, it is necessary to supply a large amount of lubricating oil mainly for the purpose of cooling and a necessary diameter of an oil path also becomes large.

However, as understood from comparison between Figs. 18(A) and 18(B), in the speed increaser 420 which uses the wedge roller 19 having a particularly small speed increasing ratio, the area in which the carrier bridge 143 can be disposed is small. For this reason, if an oil path with a large diameter is formed in the carrier bridge, the strength and the stiffness of the carrier 29 are decreased, which is not preferable.

On the other hand, the speed increaser 410 which uses the wedge roller 19 having a large speed increasing ratio has a characteristic that the diameters of the large-diameter fixed roller 15, the small-diameter fixed roller 17, and the wedge roller 19 are relatively larger than that of the high speed side shaft 11. Therefore, according to the speed increaser 410 having a large speed increasing ratio, it is possible to manufacture at least one of the large-diameter fixed roller 15 and the small-diameter fixed roller 17 as a hollow shaft as described above, to dispose the hollow pipes 137 and 138 therein, and to supply lubricating oil while effectively using the characteristic.

As described above, according to the speed increaser 400 in this configuration example, it is possible to effectively use a disposition space of a roller with a large diameter even in a case where the speed increasing ratio is large. As a result, it is possible to secure an oil path with a sufficient cross sectional area by using the hollow holes 133 and 134 of the supporting shafts 61 and 129 without a decrease in strength of the carrier.

Next, an operation of the above-described configuration will be described in further detail.

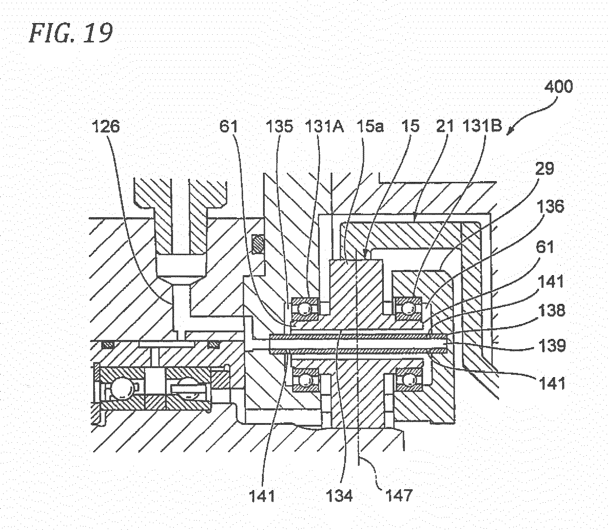

Fig. 19 is an enlarged sectional view illustrating the vicinity of the supporting shaft in the speed increaser 400 illustrated in Fig. 15. In the speed increaser 400 in this configuration, the fixed roller (the large-diameter fixed roller 15 and the small-diameter fixed roller 17) includes the supporting shafts 61.

The supporting shafts 61 protrude in a direction along the rotational axis from the opposite ends of the roller main body 15a. The fixed roller is formed to be plane-symmetric with respect to a virtual plane 147 which is orthogonal to the rotational axis and which passes through the axial center. The outer circumferential portions of the respective supporting shafts 61 which protrude from the opposite ends of the roller are supported by the rolling bearings 131A and 131B at positions separated from the roller main body 15a by the same distance. In addition, in the fixed roller, the hollow hole 134 which penetrates from one supporting shaft 61 to the other supporting shaft 61 is drilled.

According to this configuration, regarding the fixed roller integrated with the supporting shaft 61, the stiffness of one end side with respect to the axial center illustrated in Fig. 19 and the stiffness of the other end side which is opposite to the one end side are equalized.

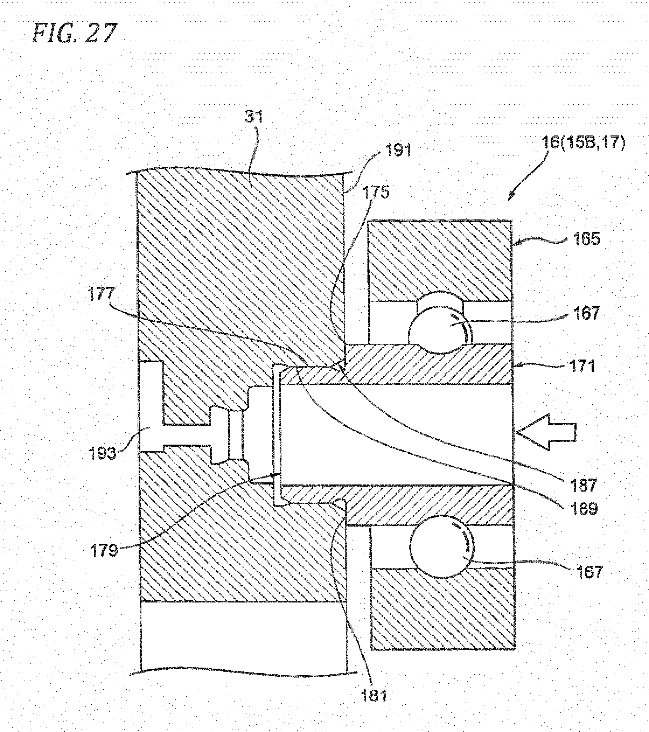

Meanwhile, in the above-described speed increaser in the related art, as illustrated in Fig. 40, it is necessary to drill the oil hole 373, via which lubricating oil is supplied to the needle bearing 369, in the supporting shaft 371 which supports the roller such that the oil hole 373 extends up to the longitudinal center portion of the supporting shaft 371. Therefore, the stiffness of one end side (the left end side in Fig. 27) with respect to the central position of the rotational axis is decreased. Furthermore, stress is likely to be concentrated on the vicinity of the oil hole 375 which communicates with the oil hole 373.

That is, according to the speed increaser 400 in this configuration example, the stiffness balance between the opposite ends of the fixed roller is stabilized in comparison with the speed increaser in the related art. Therefore, according to the speed increaser 400 in this configuration example, the stiffness balance of the supporting shaft 61 which is required to stably support the large-diameter fixed roller 15 and the small-diameter fixed roller 17 is not lost. As a result, in the speed increaser 400, even if a large radial force is applied to the supporting shaft 61, occurrence of vibration or concentration of stress is suppressed and a stable traction force can be obtained. Therefore, the dynamic force transmission efficiency is not decreased.

In addition, in a case where the supporting shaft 61 is supported by the needle bearing, a thrust force necessarily acts on the supporting shaft 61. In order to maintain the thrust force, a thrust washer is needed. However, the thrust washer increases the friction loss at a time of high speed rotation of the bearing. Therefore, if the supporting shaft 61 is supported by a ball bearing instead of the needle bearing as in this configuration, it is possible to reduce the friction loss even in a case where the supporting shaft 61 is rotated at a high speed.

Into the hollow hole 134, the hollow pipe 138 is inserted while not interfering with the supporting shaft 61. In the speed increaser 400, the hollow pipe 138 is connected to the lubricating oil supply path 126 so that lubricating oil can be supplied to each of the rolling bearings 131A and 131B via the lubricating oil ejecting port 141 which is provided on a portion of the side surface.

According to the above-described configuration, it is possible to simplify a manufacturing process since it is not necessary to perform a hole providing process, which is complicated, for forming an oil path in the shaft of each of the large-diameter fixed roller 15 and the small-diameter fixed roller 17. In addition, it is possible to easily set a lubricating oil ejecting direction since lubricating oil is introduced to the rolling bearings 131A and 131B via the hollow pipe 138. Furthermore, it is possible to adjust the ejecting direction at the time of assembly and it is possible to form an oil path with a high degree of freedom.

In addition, if lubricating oil is directly supplied to the hollow hole 134 without provided the hollow pipe 138 for lubricating oil in the hollow hole 134, it is possible to decrease the number of components in the speed increaser 400. However, in this case, lubricating oil passing through the hollow hole 134 is stirred due to rotation of a roller, which results in flow path loss. Therefore, it is desirable that lubricating oil is supplied via the hollow pipe 138 in which the oil path is not rotated.

In addition, in the speed increaser 400, a cross sectional area of the lubricating oil ejecting port 141 on the distal end side, which is opposite to the connection end side, is larger than the cross sectional area of a lubricating oil ejecting port 141 on the connection end side. Accordingly, the amount of lubricating oil is not likely to be decreased due to pressure loss and it is possible to uniformly supply lubricating oil to the rolling bearings 131A and 131B on the opposite ends of the roller.

Note that, in this configuration example, the movable roller (the wedge roller 19) is supported by a supporting shaft 149 (refer to Fig. 16) in which no hollow hole is formed. However, as with the fixed roller, the movable roller may be supported by a supporting shaft that includes a hollow hole.

### <Fifth Configuration Example>

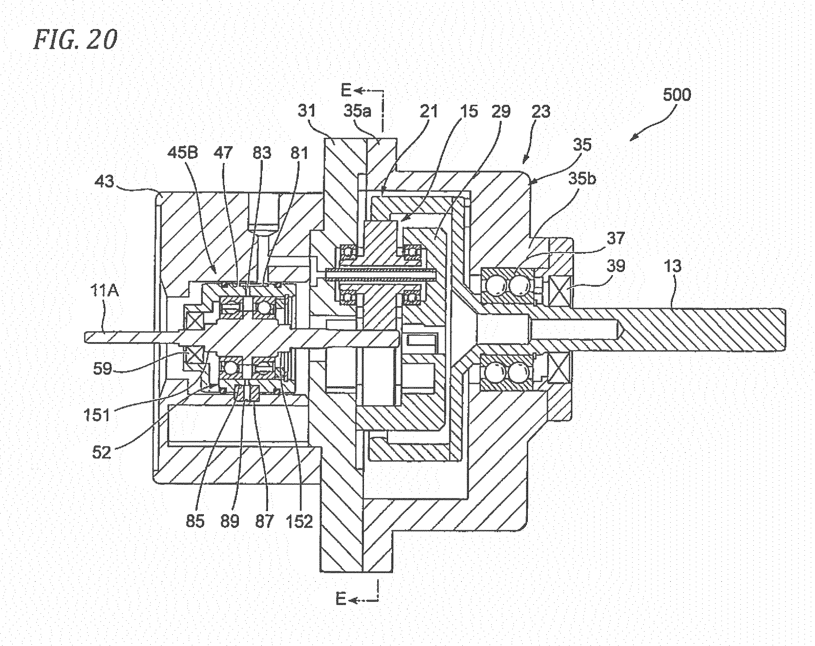

Fig. 20 is a sectional view illustrating a friction roller type speed increaser (a speed increaser) according to a fifth configuration example. A sectional view taken along line E-E in Fig. 20 is the same as Fig. 2 and thus is omitted. A speed increaser 500 of this configuration can be applied to apparatuses requiring particularly high speed rotation, examples of which include a type of compressor in which the speed of a rotational force of a prime mover (a motor) is increased at a predetermined transmission ratio and air is compressed by using an impeller disposed in a spiral pipe.

As described in Figs. 20 and 2, the speed increaser 500 includes a high speed side shaft 11A which is an output shaft, the low speed side shaft 13 which is an input shaft disposed to be parallel with the high speed side shaft 11A, the large-diameter fixed roller 15 which is a fixed roller, the small-diameter fixed roller 17 (refer to Fig. 2), the wedge roller 19 (refer to Fig. 2) which is a movable roller, and the ring roller 21. The housing 23, into which lubricating oil is supplied, surrounds the large-diameter fixed roller 15, the small-diameter fixed roller 17, and the wedge roller 19 which are friction rollers.

One end portion of the low speed side shaft 13 which is connected to the prime mover (not shown) is concentrically coupled to the ring roller 21 and the low speed side shaft 13 transmits a rotational force from the prime mover to the ring roller 21. The ring roller 21 is disposed to be eccentric with respect to the rotational axis of the high speed side shaft 11A and is rotated integrally with the low speed side shaft 13 such that the ring roller can be rotated relative to the high speed side shaft 11A.

An impeller (not shown) is fixed to one end side of the high speed side shaft 11A which is opposite to the low speed side shaft 13 side and the impeller is rotated in a spiral pipe (not shown) so that air is compressed.

The large-diameter fixed roller 15, the small-diameter fixed roller 17, and the wedge roller 19 are provided between the ring roller 21 and the high speed side shaft 11A. The large-diameter fixed roller 15, the small-diameter fixed roller 17, and the wedge roller 19 are rotatably supported between the carrier 29 and the center plate 31 in a state where respective outer circumferential surfaces thereof abut onto the outer circumferential surface of the high speed side shaft 11A and the inner circumferential surface of the ring roller 21.

As illustrated in Fig. 2, the wedge roller 19 is disposed in a region in the annular space 33 formed between the ring roller 21 and the high speed side shaft 11A, of which the width dimension in the radial direction is small. In addition, the wedge roller 19 is supported to be capable of being displaced in a direction in which the width dimension decreases and is pressed and urged by the pressing unit 20 in a direction in which the width dimension decreases.

The low speed side shaft 13 illustrated in Fig. 20 is supported by the bowl-shaped low speed shaft housing 35 via the bearing 37. The bowl-shaped front end portion 35a of the low speed shaft housing 35 is fixed to the center plate 31 via a bolt (not shown) and the base end 35b of the low speed shaft housing is connected to the outer ring of the bearing 37 which supports the low speed side shaft 13 with the inner ring thereof.

The oil seal 39 which seals a space between the low speed side shaft 13 and the low speed shaft housing 35 is attached to an outer portion in the axial direction (in the following description, the axial direction of the high speed side shaft 11A and the low speed side shaft 13 will be simply called the axial direction) of the base end 35b of the low speed shaft housing 35.

The high speed shaft housing 43 is fixed to a portion of the center plate 31 which is opposite to a portion of the center plate 31 to which the low speed shaft housing 35 is fixed. The high speed shaft housing 43 and the above-described center plate 31 and low speed shaft housing 35 are integrated with each other to form the housing 23 that surrounds the rollers 15, 17, and 19.

In the high speed shaft housing 43, the unit accommodating section 47 that accommodates the bearing unit 45 is formed.

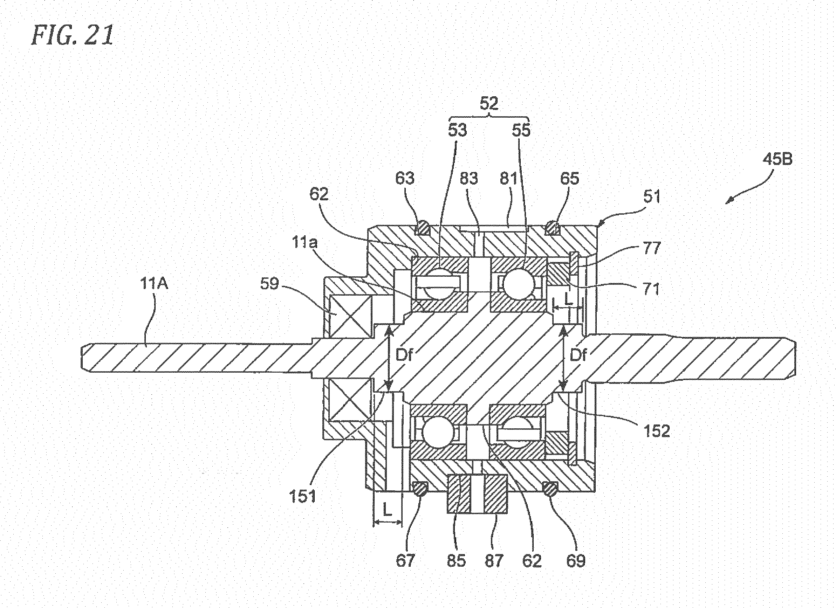

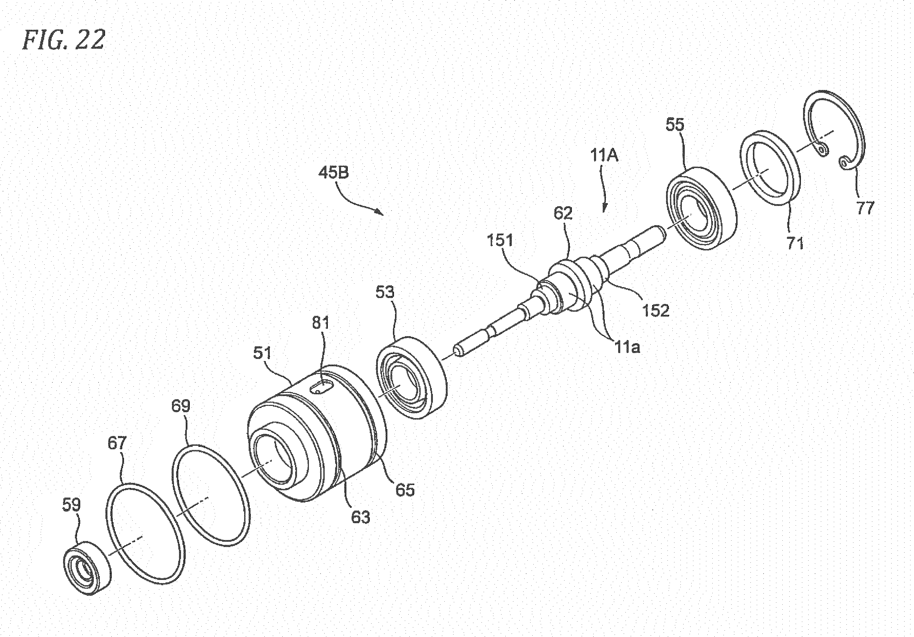

Fig. 21 is a sectional view of a bearing unit 45B and Fig. 22 is an exploded perspective view of the bearing unit 45B.

The bearing unit 45B is configured to have a cylindrical shape as a whole such that the high speed side shaft 11A is inserted thereinto and the large-diameter portion 11a, which is an axial intermediate portion of the high speed side shaft 11A, is rotatably supported.

The bearing unit 45B includes the cylindrical bearing housing 51 and angular bearings 53 and 55 as rolling bearings (a back-to-back type double-row angular bearing 52) which are disposed between an inner circumferential portion of the bearing housing 51 and the large-diameter portion 11a of the high speed side shaft 11A.

The oil seal 59 is provided being fitted into one axial end portion (on the impeller side) of the bearing housing 51. When the high speed side shaft 11A is inserted through the oil seal 59, the inner space of the bearing housing 51 including the double-row angular bearing 52 is closed. Note that, a labyrinth seal or a mechanical seal may be used as the oil seal 59.

On an outer circumferential surface of the bearing housing 51, the annular groves 63 and 65 are formed and the O-rings 67 and 69 are mounted on the annular groves 63 and 65, respectively.

More specifically, in the bearing unit 45B, the retaining ring 77, the pre-load spring 71 such as a waved washer which is an elastic body, the angular bearing 55, the angular bearing 53, and the oil seal 59 are arranged in this order from the other axial end portion of the bearing housing 51 (which is on a side opposite to the impeller side). Between the angular bearings 55 and 53, a maximum outer diameter portion 62 of the high speed side shaft 11A is disposed.

The high speed side shaft 11A in the speed increaser 500 of this configuration includes balance correction surfaces 151 and 152 which are disposed on axial opposite flank sides interposing the angular bearings 53 and 55 therebetween.

Before the high speed side shaft 11A is built into the bearing unit 45B, the two balance correction surfaces 151 and 152 which are illustrated in Fig. 21 of a single output shaft are cut so as to perform balance correction. For example, the single high speed side shaft 11A is rotated with an attachment surface of the angular bearings 53 and 55 and an impeller attachment surface being supported and the balance correction surfaces 151 and 152 are cut through a cutting process or the like. In this configuration, a pair of balance correction surfaces 151 and 152 can be individually adjusted and thus can be subject to fine adjustment with a large adjustment margin. Note that, in the balance correction, the adjustment may be performed through a combination of various methods such as addition of weights instead of the cutting of the balance correction surfaces 151 and 152. The target imbalance allowance level at this time is equal to or higher than G2.5 which is a balance quality level specified in JIS B 0905.

The outer diameters of the balance correction surfaces 151 and 152 are smaller than the outer diameter of the attachment surface of each of the angular bearings 53 and 55 of the high speed side shaft 11A. In addition, an axial length L of each of the balance correction surfaces 151 and 152 is equal to or greater than the half of an outer diameter Df of each of the balance correction surfaces 151 and 152. That is, a relationship of axial length L/outer diameter Df≥1/2 is satisfied. Therefore, the axial length L of each of the balance correction surfaces 151 and 152 becomes larger than a distance from the shaft center and thus it becomes possible to secure a volume sufficient for a balance adjustment operation in which the shaft is cut or a weight is added.

The outer diameters Df of the balance correction surfaces 151 and 152 are smaller than the outer diameter of the attachment surface of the angular bearings 53 and 55 and a volume as described above is needed since the balance correction surfaces 151 and 152 are cut by a tool (a drill or the like). Regarding the more specific dimensions, the outer diameter of each of the balance correction surfaces 151 and 152 is φ11 mm and the axial length L thereof is 5 mm while the outer diameter of the attachment surface of each of the angular bearings 53 and 55 is φ15 mm. Therefore, it is possible to form the balance correction surfaces 151 and 152 by making a cut having a diameter of 4 to 5 mm.

Furthermore, on the high speed side shaft 11A, the maximum outer diameter portion 62, which is a convex portion protruding radially outward from the axial center of the high speed side shaft 11A, is formed. On the axial opposite flank sides of the maximum outer diameter portion 62, bearing attachment portions to which the angular bearings 53 and 55 are attached are provided.

The outer circumferential surface of the maximum outer diameter portion 62 may be used as a balance correction surface. Therefore, in the friction roller type speed increaser 500, the balance correction can be performed at three positions of the balance correction surfaces 151 and 152 and the outer circumferential surface of the maximum outer diameter portion 62.

One pair of angular bearings 53 and 55 is inserted onto the large-diameter portion 11a of the high speed side shaft 11A from different directions with the maximum outer diameter portion 62 as a border. The angular bearings 53 and 55 are arranged in a face-to-face manner (DF). The inner ring of each of the angular bearings 53 and 55 abuts onto the maximum outer diameter portion 62 and thus movement of the inner rings in a direction in which the inner rings approach each other is restricted.

In addition, an end surface of the outer ring of the angular bearing 53 which is on a side opposite to the maximum outer diameter portion 62 side abuts onto a side surface of a stepped portion of the maximum outer diameter portion 62 which is formed in the bearing housing 51. Meanwhile, the outer ring of the angular bearing 55 is urged toward the oil seal 59 side by the pre-load spring 71 which is disposed on one side in the axial direction (the right side in Fig. 21). Therefore, the outer rings of one pair of the angular bearings 53 and 55, which is arranged in parallel with the maximum outer diameter portion 62 being interposed therebetween, are fixed to the bearing housing 51 in a state where an appropriate pre-load is applied to both of the outer rings.

Note that, in a case where a turbocharger or the like in which an impeller is rotated by the friction roller type speed increaser 500 is configured, when the impeller is rotated, an axial force from the impeller side is applied to the high speed side shaft 11A due to a difference in atmospheric pressure in the axial direction. For this reason, if the pre-load spring 71 in the bearing unit 45B is disposed on the impeller side, a pre-load applied to the angular bearing 55 on the low speed side shaft 13 side (opposite to the impeller side) may be decreased. Therefore, it is desirable that the pre-load spring 71 is disposed on a side opposite to the impeller side.

Lubricating oil is supplied to the angular bearings 53 and 55 from the radial outside of a position at which the maximum outer diameter portion 62 is disposed. On the outer circumferential portion of the bearing housing 51, the recess groove 81 via which lubricating oil is supplied to the angular bearings 53 and 55 and the through hole 83 in the recess groove 81 through which the outer circumferential surface and the inner circumferential surface communicate with each other are formed. The recess groove 81 and the through hole 83 are formed in a region between the annular groves 63 and 65 which extends in the axial direction of the bearing housing 51. Since the recess groove 81 and the through hole 83 are disposed between the O-rings 67 and 69, it is possible to prevent lubricating oil from leaking out.

In addition, the key groove 85 is formed on the bearing housing 51 and the key 87 for preventing rotation is engaged with the key groove 85. In addition, on the inner circumferential portion of the unit accommodating section 47 formed in the high speed shaft housing 43 illustrated in Fig. 20, the cut-out portion 89 is formed on a position corresponding to the key groove 85. Since the key 87 is engaged with the key groove 85 and the cut-out portion 89, it is possible to prevent the bearing unit 45B from rotating together with the high speed side shaft 11A.

The bearing unit 45B in this configuration is accommodated with the O-rings 67 and 69, which protrude from the outer circumferential surface of the bearing housing 51, being in contact with the unit accommodating section 47 of the high speed shaft housing 43. Therefore, the bearing unit 45B is supported such that the bearing unit 45B can be moved in the radial direction relative to the unit accommodating section 47 by a distance corresponding to the squeeze of the O-rings 67 and 69. That is, the bearing unit 45B is floating-supported in the unit accommodating section 47 such that the bearing unit 45B can be moved in the radial direction.

According to the configuration, even in a case where the rotational shaft of the wedge roller 19 is moved in the radial direction corresponding to rotational torque input to the low speed side shaft 13 and the high speed side shaft 11A becomes eccentric in the radial direction, the O-rings 67 and 69 are elastically deformed. Accordingly, the eccentricity of the high speed side shaft 11A is absorbed. In addition, since the oil seal 59 moves in accordance with the movement of the high speed side shaft 11A, the oil seal 59 is not squashed by the high speed side shaft 11A and the oil seal 59 is not unevenly worn.

Regarding the bearing unit 45B in this configuration, as with Fig. 5, since the O-rings 67 and 69 are squashed in a case where the high speed side shaft 11A becomes eccentric, the high speed side shaft 11A is allowed to be displaced in the radial direction by Δd and inclination in a direction Δθ is not likely to occur.

The other effects are the same as those in the above-described speed increaser 100 and thus description thereof will be omitted here.

According to the friction roller type speed increaser 500, since the interference of the oil seal 59 can be set small, rotational torque loss of the high speed side shaft 11A is suppressed and it is possible to suppress a decrease in speed transmission efficiency. In addition, the oil seal 59 is not displaced relative to the high speed side shaft 11A in the radial direction even when the high speed side shaft 11A becomes eccentric and thus the seal is not unevenly worn and lubricating oil does not leak out.

In the speed increaser 500 in this configuration, rotation input to the low speed side shaft 13 from a prime mover (not shown) is transmitted to the ring roller 21 which integrally rotates with the low speed side shaft 13. Furthermore, the rotation transmitted to the ring roller 21 is transmitted to the large-diameter fixed roller 15, the small-diameter fixed roller 17, and the wedge roller 19 with the contact surface pressure being increased due to the wedge effect caused by the wedge roller 19 which is pressed and urged by the pressing unit 20 in a direction in which the width dimension decreases. The three rollers 15, 17, and 19 transmit a dynamic force to the high speed side shaft 11A so that the impeller fixed to the high speed side shaft 11A is rotated and air is compressed.

Meanwhile, the angular bearings 53 and 55 are positioned in the axial direction with the maximum outer diameter portion 62 of the high speed side shaft 11A abutting onto the inner ring of the angular bearing 53. In addition, a pre-load is applied to the angular bearings 53 and 55 via an elastic force of the pre-load spring 71.

In addition, since the high speed side shaft 11A is floating-supported in the high speed shaft housing 43 via the O-rings 67 and 69 which are provided on the outer circumferential portion of the bearing housing 51, radial displacement of the bearing unit 45B is absorbed and the load applied to the angular bearings 53 and 55 is reduced.

Next, an operation of the above-described configuration will be described in further detail.

The above-described bearing unit 45B includes the plurality of angular bearings 53 and 55 which rotatably support the high speed side shaft 11A and includes the bearing housing 51 to which the oil seal 59 that seals the outer circumferential portion of the high speed side shaft 11A is fixed. The inner diameter portion of the bearing housing 51 supports the outer circumferential surface of the plurality of angular bearings 53 and 55 and the outer diameter portion of the bearing housing 51 is floating-supported in the high speed shaft housing 43.

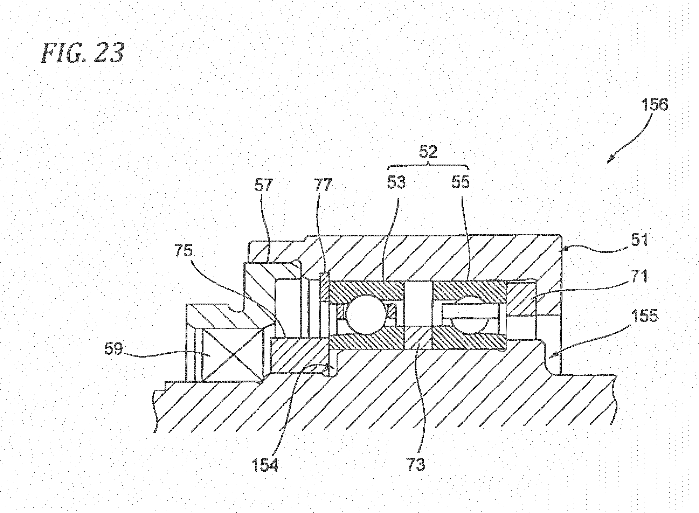

Here, the bearing unit 45B in this configuration will be described being compared with an output shaft unit which is a reference example. Fig. 23 is a sectional view illustrating a main portion of an output shaft unit 156 according to a reference example.

In the output shaft unit 156 in the reference example, one pair of angular bearings 53 and 55 is installed on the high speed side shaft 11A with the spacer 73 being interposed therebetween and the collar 75 is press-fitted and fixed so as to prevent falling-out in the axial direction. The angular bearing 53 is fixed by the retaining ring 77 such that the outer ring is prevented from falling out in the axial direction. In the case of such a configuration, as with the above description, the balance correction is performed through rotation with an attachment surface of the angular bearings 53 and 55 and an impeller attachment surface being supported and two balance correction surfaces 154 and 155 being cut.

However, in the configuration according to the reference example, although it is possible to secure a correction surface on a sun roller surface side with respect to a bearing attachment surface, it is not possible to secure a sufficient surface for correction on an impeller attachment surface side since the number of components (particularly, the collar 75 or the like) to be installed is large. Therefore, in some cases, it is difficult to perform balance correction until an allowable imbalance is reached.

On the contrary, in the speed increaser 500 in this configuration, the angular bearings 53 and 55 which support the high speed side shaft 11A and the oil seal 59 are fixed to the same bearing housing 51. Therefore, in the friction roller type speed increaser 500, since the oil seal 59 is directly fixed to the bearing housing 51, the seal housing 57 pertaining to a case where the oil seal 59 is fixed to the bearing housing 51 via a seal housing 153 as illustrated in the reference example is not needed. Therefore, the number of components is reduced and an additional space is made so that it becomes easy to secure the balance correction surface 151 on the impeller attachment surface side. As a result, according to the friction roller type speed increaser 500 in this configuration, a surface which can be used for the balance correction of the high speed side shaft 11A is enlarged and it becomes easy to perform a correction process until the allowable imbalance is reached.

In addition, regarding the bearing unit 45B, since the bearing housing 51 and the seal housing 57 are integrated with each other, there is an improvement in assembling property. In addition, the retaining ring 77 for preventing the assembly of the high speed side shaft 11A and the angular bearings 53 and 55 from falling out from the bearing housing 51 in the axial direction is disposed closed to the friction rollers in the bearing housing 51 and the maximum outer diameter portion 62 is integrally formed with the high speed side shaft 11A. According to this configuration, in the bearing unit 45B, the three components (the seal housing 57, the collar 75, and the spacer 73) in the reference example can be omitted.

In addition, regarding the high speed side shaft 11A, since the collar 75 is not needed, it is possible to secure a space between the impeller attachment surface and the attachment surface of the angular bearings 53 and 55. As a result, it is possible to dispose the balance correction surfaces 151 and 152 on the axial opposite flank sides of one pair of angular bearings 53 and 55 interposing the maximum outer diameter portion 62 of the high speed side shaft 11A such that the areas of the balance correction surfaces 151 and 152 become large while being the same as each other.

In addition, since the rolling bearing is the face-to-face type double-row angular bearing 52, when a pre-load is applied, the stiffness of the angular bearings 53 and 55 is increased.

Note that, the rolling bearing that supports the output shaft is not limited to a double-row angular ball bearing and an arbitrary bearing may be used as the rolling bearing. The number of bearings may be one as long as the bearings are used while being combined with each other. In addition, as the pre-load spring, it is also possible to use a disc spring, a coil spring, or the like instead of the waved washer described in the above-described configuration example.

Therefore, according to the speed increaser 500 having the above-described configuration, it is possible to rotate the high speed shaft at high accuracy and to achieve vibration reduction and improvement in bearing life while maintaining a feature of the related art that, even when a shaft becomes eccentric, it is possible to maintain an excellent sealing property and an interference can be set to be small.

### <Sixth Configuration Example>

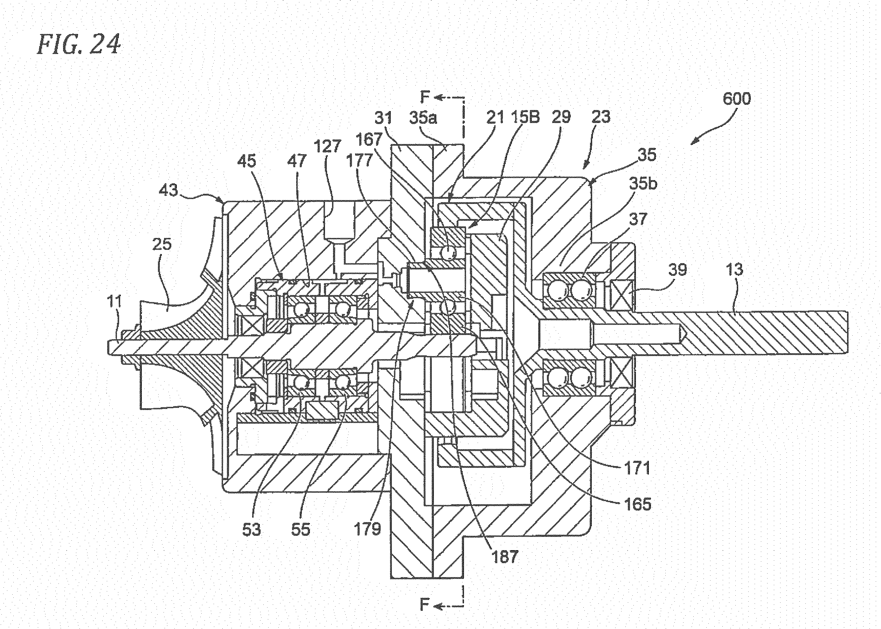

Fig. 24 is a sectional view illustrating a friction roller type speed increaser (a speed increaser) according to a sixth configuration example. A sectional arrow view taken along line F-F in Fig. 24 is the same as Fig. 2 and thus is omitted. A speed increaser 600 of this configuration can be applied to apparatuses requiring particularly high speed rotation, examples of which include a type of compressor in which the speed of a rotational force of a prime mover (a motor) is increased in and air is compressed by using an impeller disposed in a spiral pipe (not shown).

As described in Figs. 24 and 2, the speed increaser 600 includes the high speed side shaft 11 which is an output shaft, the low speed side shaft 13 which is an input shaft disposed to be parallel with the high speed side shaft 11, the large-diameter fixed roller 15B which is a fixed roller, the small-diameter fixed roller 17 (refer to Fig. 2), the wedge roller 19 (refer to Fig. 2) which is a movable roller, and the ring roller 21. The housing 23, into which lubricating oil is supplied, surrounds the rollers 15B, 17, and 19.

One end portion of the low speed side shaft 13 which is connected to the prime mover is concentrically coupled to the ring roller 21 and the low speed side shaft 13 transmits a rotational force from the prime mover to the ring roller 21. The ring roller 21 is disposed to be eccentric with respect to the rotational axis of the high speed side shaft II. The low speed side shaft 13 and the ring roller 21 are rotated integrally with each other and the ring roller 21 the high speed side shaft 11 can be rotated relative to each other.

An impeller 25, for example, is fixed to one end portion of the high speed side shaft 11. The impeller 25 is rotated being disposed in a spiral pipe (not shown) so that air is compressed.

The large-diameter fixed roller 15B, the small-diameter fixed roller 17 (refer to Fig. 2), and the wedge roller 19 (refer to Fig. 2) are provided between the ring roller 21 and the high speed side shaft 11. The large-diameter fixed roller 158, the small-diameter fixed roller 17, and the wedge roller 19 are rotatably disposed between the carrier 29 illustrated in Fig. 24 and the center plate (the roller supporting member) 31 in a state where respective outer circumferential surfaces thereof abut onto the outer circumferential surface of the high speed side shaft 11 and the inner circumferential surface of the ring roller 21. In addition, the large-diameter fixed roller 15B and the small-diameter fixed roller 17 are rotatably supported by the center plate 31.

As illustrated in Fig. 2, the wedge roller 19 is disposed in a region in the annular space 33 formed between the ring roller 21 and the high speed side shaft 11, of which the width dimension in the radial direction is small. In addition, the wedge roller 19 is supported to be capable of being displaced in a direction in which the width dimension decreases and is pressed and urged by the pressing unit 20 in a direction in which the width dimension decreases.

As illustrated in Fig. 24, the low speed side shaft 13 is supported by the bowl-shaped low speed shaft housing 35 via the bearing 37. The bowl-shaped front end portion 35a of the low speed shaft housing 35 is fixed to the center plate 31 via a bolt (not shown). In addition, the base end 35b is connected to the outer ring of the bearing 37 and the inner ring of the bearing 37 is fixed to the low speed side shaft 13. Therefore, the low speed side shaft 13 is rotatably supported in the low speed shaft housing 35 via the bearing 37.

The oil seal 39 which seals a space between the low speed side shaft 13 and the low speed shaft housing is attached to an outer portion in the axial direction of the bearing 37 (in the following description, the axial direction of the high speed side shaft 11 and the low speed side shaft 13 will be simply called the axial direction) of the base end 35b of the low speed shaft housing 35.

The high speed shaft housing 43 is fixed to a portion of the center plate 31 which is opposite to a portion of the center plate 31 to which the low speed shaft housing 35 is fixed. The high speed shaft housing 43 and the above-described center plate 31 and low speed shaft housing 35 are integrated with each other to form the housing 23 that surrounds the rollers 15B, 17, and 19.

The high speed side shaft 11 is rotatably supported in the high speed shaft housing 43 via the bearings 53 and 55.

Next, configurations of the large-diameter fixed roller 15B and the small-diameter fixed roller 17 will be described.

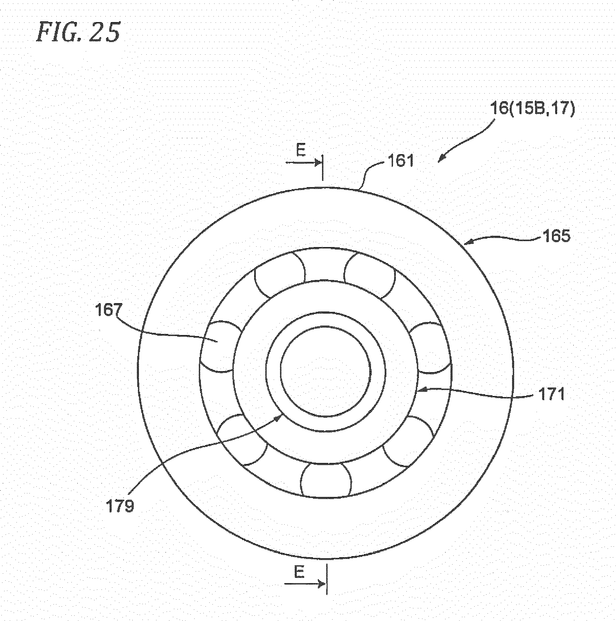

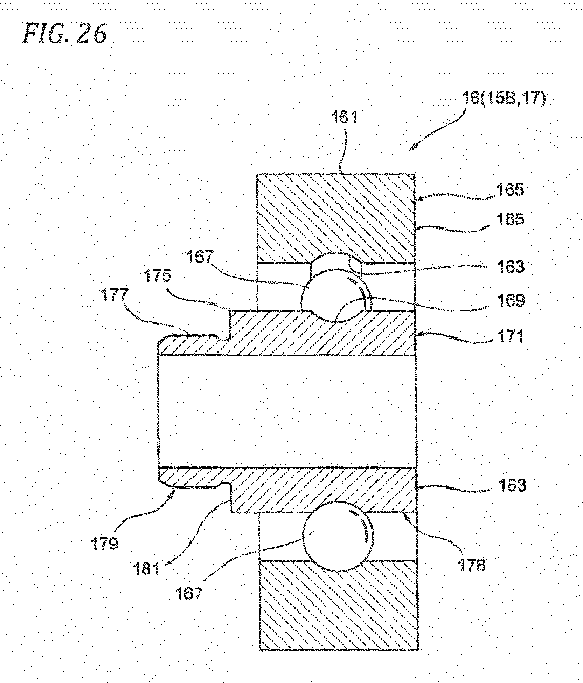

Fig. 25 is a front view of the large-diameter fixed roller 15B and Fig. 26 is a sectional view of the large-diameter fixed roller illustrated in Fig. 25 which is taken along line E-E. Here, the description will be made using the configuration of the large-diameter fixed roller 15B as an example. However, the small-diameter fixed roller 17 also has the same configuration.

The large-diameter fixed roller 15B integrally includes an outer ring 165 which includes a traction surface 161 formed on the outer diameter portion and an outer ring raceway surface 163 (refer to Fig. 26) formed on the inner diameter portion, a plurality of rolling elements 167 which are in rolling contact with the outer ring raceway surface 163, and an inner ring 171 which includes an inner ring raceway surface 169 formed on the outer diameter portion which is in rolling contact with the plurality of rolling elements 167. Hereinafter, the outer ring 165, the rolling element 167, and the inner ring 171 of the large-diameter fixed roller 15B will be collectively called a fixed roller bearing 16 (the same applies to the small-diameter fixed roller 17).

Note that, the plurality of rolling elements 167 are disposed at equal intervals in a circumferential direction in a state of being held by a holder (not shown).

As illustrated in Fig. 26, the inner ring 171 of the fixed roller bearing 16 includes a base portion 178 which faces the outer ring 165 and a protrusion 179 which extends axially outward from one axial end portion 175 of the base portion 178.

The base portion 178 is formed to have a diameter larger than the outer diameter of the protrusion 179. At a joint portion between the protrusion 179 and the base portion 178 which is a base end, an annular abutting surface 181 is formed which extends radially outward from the outer diameter portion of the protrusion 179 in a direction perpendicular to the outer diameter portion.

In addition, an end surface 183 of the inner ring 171 which is on a side opposite to the protrusion 179 side is flush with an end surface 185 of the outer ring 165. That is, the end surface of the fixed roller bearing 16 which is on a side opposite to the protrusion 179 side is formed as a flat surface which is perpendicular to the axial direction.

Fig. 27 is a sectional view illustrating a state where the fixed roller bearing 16 having the above-described configuration is fixed to the center plate 31. The protrusion 179 of the fixed roller bearing 16 is press-fitted into an insertion hole 187 which is formed in the center plate 31. Therefore, the fixed roller bearing 16 is fixed to the center plate 31.

The insertion hole 187 of the center plate 31 is formed at a predetermined supporting position of the fixed roller bearing 16. The inner circumferential surface of the insertion hole 187 is a fitting surface 189 into which a fitting surface 177 of the protrusion 179 is fitted. When the fixed roller bearing 16 is press-fitted into the insertion hole 187, the abutting surface 181 of the fixed roller bearing 16 abuts onto an end surface 191 of the center plate 31 so that the position of the fixed roller bearing 16 is restricted in the axial direction.

In addition, an oil path 193 is formed in a portion of the center plate 31 which is opposite to a portion of the center plate 31 at which the fixed roller bearing 16 is inserted into the insertion hole 187. The oil path 193 is formed to penetrate through the front and rear surfaces of the center plate 31.

As illustrated in Fig. 24, the high speed shaft housing 43 is provided with the lubricating oil supply port 127. Lubricating oil which is supplied to the lubricating oil supply port 127 is supplied to the inner diameter portion of the inner ring 171 of the fixed roller bearing 16 through the oil path 193 illustrated in Fig. 27 and is supplied to the carrier 29 (refer to Fig. 24) side with the inner diameter portion functioning as a flow path.

As described above, an operation of installing the fixed roller bearing 16 into the center plate 31 is performed by only press-fitting the protrusion 179 of the fixed roller bearing 16 into the insertion hole 187 of the center plate 31 and thus the installing operation itself is simple. In addition, since the roller is integrated with the bearing, it is possible to decrease the number of components in the fixed roller bearing 16.

In addition, the insertion depth by which the fixed roller bearing 16 is inserted into the insertion hole 187 is restricted with the abutting surface 181 of the fixed roller bearing 16 abutting onto the end surface 191 of the center plate 31. That is, with a simple operation of inserting the fixed roller bearing 16 into the insertion hole 187 until the abutting surface 181 abuts onto the end surface 191, it is possible to adjust the position of the fixed roller bearing 16 in the axial direction at high accuracy and thus there is an improvement in assembling property.

In addition, since both of the large-diameter fixed roller 15 and the small-diameter fixed roller 17 are supported by the same member, which is the center plate 31, it is possible to adjust the position of the center of the rotational shaft, the degree of parallelism of the rotational shaft, and the axial position of each roller at high accuracy. In addition, since the large-diameter fixed roller 15 and the small-diameter fixed roller 17 are supported by the same member, even in a case where a large radial force and a large axial force are applied to the fixed roller bearing 16, each fixed roller bearing 16 is also supported by the same member in the same manner and thus a variation in deformation of each fixed roller bearing 16 becomes small.

Furthermore, since the fixed roller bearing 16 is cantilever-supported via the protrusion 179, a dimension in the axial direction can be reduced and it is possible to cause a supporting target portion of the fixed roller bearing 16 to be compact. In addition, since the end surface of the fixed roller bearing 16 which is on a side opposite to the protrusion 179 side is formed as a flat surface which is perpendicular to the axial direction, it is possible to support the fixed roller bearing 16 in a space-saving manner. That is, it is possible to reduce the axial length of a supporting structure of the fixed roller bearing 16 and to further reduce the size of the speed increaser 600.

In addition, regarding the fixed roller bearing 16, since the roller and the bearing are integrated with each other, the rotational axis of the roller coincides with the central axis of the inner ring 171 at high accuracy. As a result, in an assembling process of the speed increaser 600, an operation of adjusting the axial direction or the axial gap of the fixed roller bearing 16 is not needed and thus there is an improvement in assembling property of the speed increaser 600.

Note that, the fitting surfaces 177 and 189 may be tapered surfaces which are engaged with each other or a combination of a circumferential surface which is parallel with the axial direction and a tapered surface instead of being circumferential surfaces which are parallel with the axial direction. In this case, it is possible to adjust the insertion depth of the fixed roller bearing 16 at high accuracy by using the tapered surface.

The fitting surfaces 177 and 189 may be configured to be fixed to each other via an adhesive agent being in a slight clearance fit state. In addition, the protrusion 179 and the insertion hole 187 may have an interference fit relationship in which the protrusion 179 and the insertion hole 187 are fixed to each other through shrink-fitting.

In addition, the configuration of the above-described fixed roller bearing 16 can be applied not only to the large-diameter fixed roller 15 and the small-diameter fixed roller 17 but also to the wedge roller 19 and there is an improvement in assembling property in the same manner as described above.

### <Modification Example of Sixth Configuration Example>

The above-described fixed roller bearing 16 includes a single-row ball bearing. However, the invention is not limited to this.

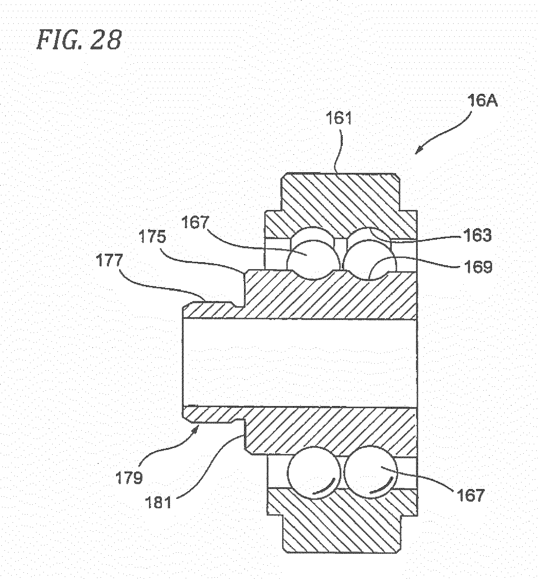

Fig. 28 is a sectional view of a fixed roller bearing which includes a plurality of rows of ball bearings. A fixed roller bearing 16A illustrated in Fig. 28 includes a plurality of (two in Fig. 28) rows of ball bearings. According to this configuration, even in a case where the load to the roller is increased, more stable support is possible.

### <Seventh Configuration Example>

Next, a configuration of a friction roller type speed increaser (a speed increaser) in which a lubricating oil supply route to the wedge roller 19, the large-diameter fixed roller 15, and the small-diameter fixed roller 17 is further improved will be described.

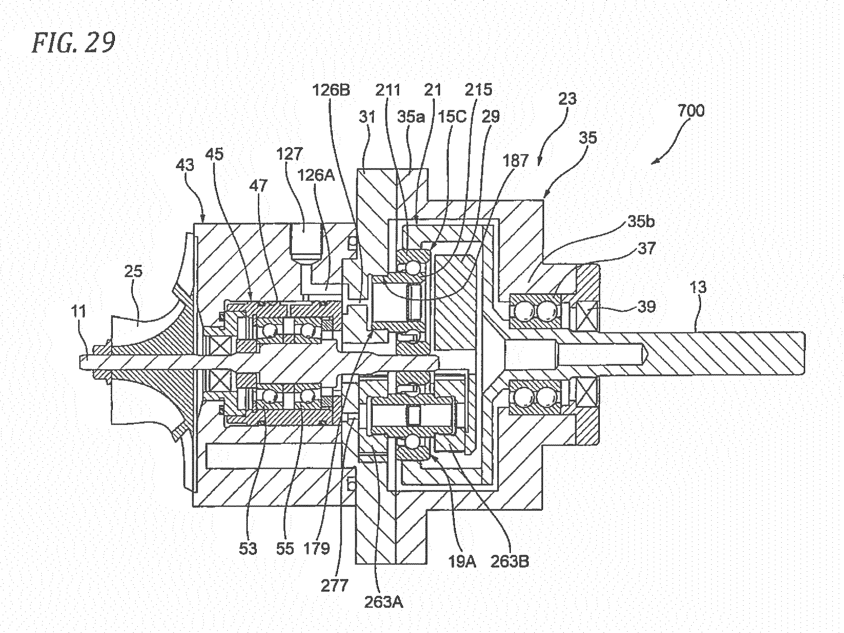

Fig. 29 is a sectional view of a friction roller type speed increaser in a seventh configuration example which illustrates a section taken along line F-F in Fig. 2. A speed increaser 700 in this configuration is an example of a configuration used for an electronic air compressor and the impeller 25 disposed in a spiral pipe (not shown) is attached to the high speed side shaft 11 which is an output shaft.

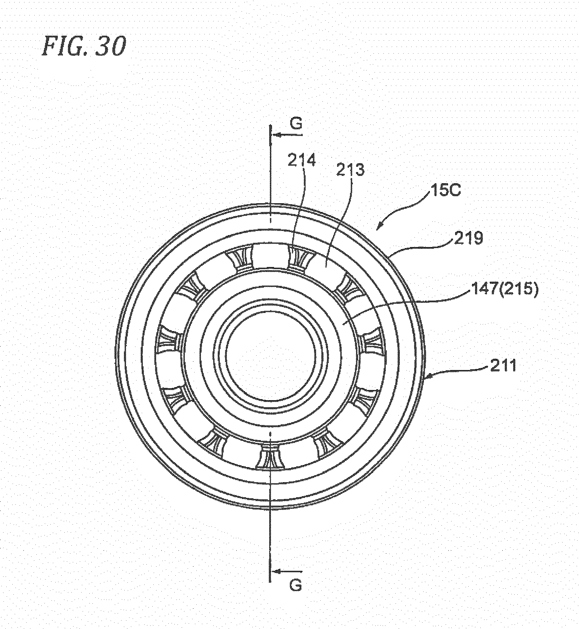

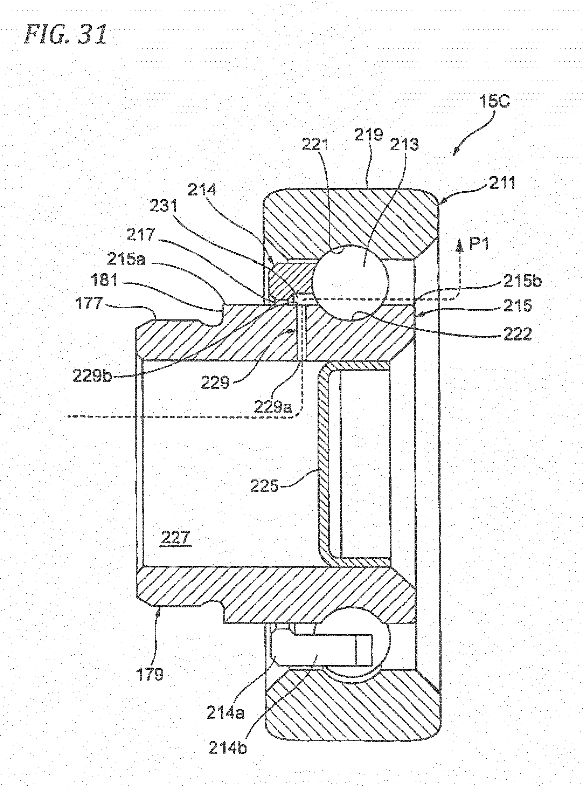

Fig. 30 is a side view of a large-diameter fixed roller 15C built into the speed increaser 700 in this configuration as seen from the axial impeller 25 side and Fig. 31 is a sectional view taken along line G-G in Fig. 30.

The large-diameter fixed roller 15C integrally includes an outer ring 211, a plurality of rolling elements 213, a holder 214, and an inner ring 215.

As illustrated in Fig. 31, the outer ring 211 includes a traction surface 219 formed on the outer diameter portion and an outer ring raceway surface 221 formed on the inner diameter portion. The rolling elements 213 are in rolling contact with an inner ring raceway surface 222, which is formed on the outer circumferential surface of the inner ring 215, and the outer ring raceway surface 221 being interposed therebetween.

The holder 214 includes an annular base portion 214a, a plurality of pillar portions 214b which axially protrude from one surface of the base portion 214a in the axial direction at predetermined intervals in a circumferential direction of the base portion 214a, and an annular projection 217 which is formed on the inner circumferential portion of the base portion 214a and protrudes radially inward. The projection 217 is formed to have an annular shape which continues in the circumferential direction of the holder 214. The holder 214 is a crown-shaped holder in which a pocket for rollably holding the rolling element 213 is defined between adjacent pillar portions 214b.

The inner ring 215 is provided with the protrusion 179 which extends axially outward from one axial end portion 215a of the outer diameter surface which faces the outer ring 211. The outer diameter surface of an extending portion of the protrusion 179 is the fitting surface 177 with respect to the insertion hole 187 formed in the center plate 31 (refer to Fig. 29).

In addition, the outer diameter surface of the one axial end portion 215a of the inner ring 215 is formed to have a diameter larger than the outer diameter of the fitting surface 177. Therefore, the fitting surface 177 is connected to the annular abutting surface 181 which extends radially outside in a direction perpendicular to the fitting surface 177 at the position of one axial end portion thereof. When the large-diameter fixed roller 15C is press-fitted into the center plate 31, the abutting surface 181 abuts onto the center plate 31 so that the large-diameter fixed roller 15C is positioned in the axial direction.

A bottomed cylindrical blanking plug 225, of which the diameter is the same as the inner diameter of the inner ring 215, is disposed on an end portion of the inner diameter portion of the inner ring 215 which is on the other axial end portion 215b side. The blanking plug 225 closes one end of the inner diameter portion of the inner ring 215. Accordingly, an inner ring inner space 227 in which lubricating oil is stored is defined in the inner diameter portion of the inner ring 215.

In addition, at least one lubricating oil hole 229, through which an inner ring outer diameter portion and the inner ring inner space 227 communicate with each other, is drilled in a portion of the inner ring 215. An inner ring inner diameter portion side opening 229a of the lubricating oil hole 229 is disposed to face the inner ring inner space 227 which is defined by the blanking plug 225 in the inner diameter portion of the inner ring 215.

An inner ring outer diameter portion side opening 229b of the lubricating oil hole 229 is disposed to face the inner diameter surface of the holder between the projection 217 of the holder 214 and a bottom portion of the pocket and opens into a fine gap 231 between the inner diameter surface of the holder and the outer circumferential surface of the inner ring.

According to the large-diameter fixed roller 15C in this configuration, lubricating oil supplied from the lubricating oil supply port 127 (refer to Fig. 29) is supplied to the inner ring inner space 227 through a lubricating oil supply path 126A formed in the high speed shaft housing 43 and a lubricating oil supply path 126B formed in the center plate 31. The lubricating oil supplied to the inner ring inner space 227 is ejected toward the inner circumferential surface of the holder 214 through the lubricating oil hole 229 as illustrated by an arrow P1 in Fig. 31.

The lubricating oil which has reached the fine gap 231 in the holder after being ejected from the lubricating oil hole 229 flows toward the rolling element 213 with a direction in which the lubricating oil flows being changed by the projection 217 formed on the inner circumferential surface of the holder 214. Accordingly, lubricating oil is supplied to the inner ring raceway surface 222 at high efficiency. In addition, lubricating oil supplied to the rolling element 213 is blown away to a ring roller 218 (refer to Fig. 29) side due to a centrifugal force and is returned to a lubricating oil supply pump (not shown) after lubricating and cooling the ring roller 21 in the end.

According to this configuration, when the lubricating oil is supplied from the high speed shaft housing 43 to the large-diameter fixed roller 15C, a necessary and sufficient amount of lubricating oil is reliably supplied to the inside of the bearing of the large-diameter fixed roller 15C. Accordingly, a decrease in life and seizure of the bearing due to lubrication failure are prevented.

Note that, although a configuration for supplying lubricating oil to the large-diameter fixed roller 15C has been described in the above description, the same configuration can also be applied to the small-diameter fixed roller 17 (refer to Fig. 2). In this case also, effects which are the same as described above can be obtained.

Furthermore, the above-described configuration also can be applied to a wedge roller 19A. Hereinafter, a configuration example in which the above-described configuration has been applied to the wedge roller 19A will be described.

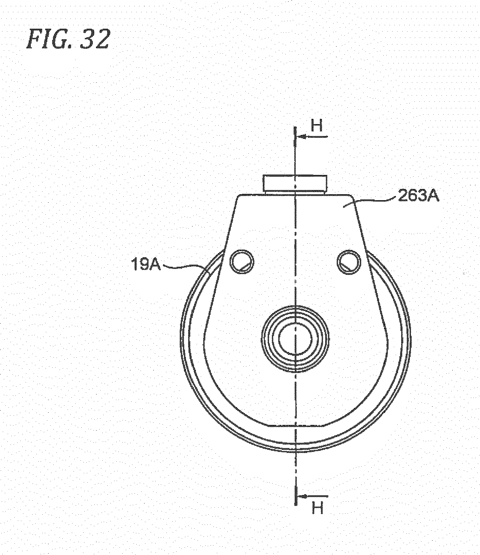

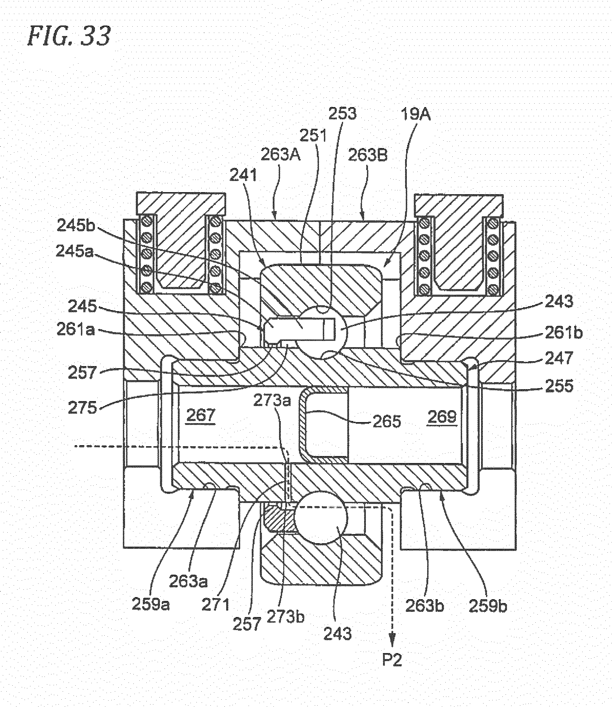

Fig. 32 is a side view of the wedge roller 19A built into the speed increaser 700 in this configuration as seen from the axial direction and Fig. 33 is a sectional view taken along line H-H in Fig. 32.

As illustrated in Fig. 33, the wedge roller 19A integrally includes an outer ring 241, a plurality of rolling elements 243, a holder 245, and an inner ring 247.

The outer ring 241 includes a traction surface 251 formed on the outer diameter portion and an outer ring raceway surface 253 formed on the inner diameter portion. The plurality of rolling elements 243 are in rolling contact with the outer ring raceway surface 253 and an inner ring raceway surface 255 being held by the holder 245. The holder 245 is a crown-shaped holder which includes a base portion 245a and a pillar portion 245b as with the above-described holder 214 which is illustrated in Fig. 31. In addition, regarding the holder 245, an annular projection 257 which protrudes radially inward is formed on a holder bottom portion on one axial end side in which the bottom of the pocket is formed.

The inner ring 247 includes the inner ring raceway surface 255 formed on the outer diameter portion thereof and includes protrusions 259a and 259b on axial opposite flank sides of the inner ring raceway surface 255. The protrusion 259a extends axially outward from one axial end portion 261a of the inner ring 247 and the protrusion 259b extends axially outward from the other axial end portion 261b of the inner ring 247.

With the protrusions 259a and 259b being fitted into fitting surfaces 263a and 263b which are formed in a pair of dividable roller housings 263A and 263B, the outer ring 241 of the wedge roller 19A is rotatably supported in the roller housings 263A and 263B.

A bottomed cylindrical blanking plug 265, of which the diameter is the same as the inner diameter of the inner ring 247, is disposed on the axial center portion of the inner diameter portion of the inner ring 247. The blanking plug 265 closes the inner diameter portion of the inner ring 247 being disposed in the axial intermediate portion. That is, the inner diameter portion of the inner ring 247 is partitioned into inner ring inner spaces 267 and 269 by the blanking plug 265 and both of the spaces are separated from each other. In addition, the inner ring inner space 267 is connected to the lubricating oil supply path 126B which is formed in the center plate 31 (refer to Fig. 29).

In addition, at least one lubricating oil hole 271, through which the outer diameter surface of the inner ring and the inner diameter surface of the inner ring communicate with each other, is drilled in the inner ring 247. An inner ring inner diameter portion side opening 273a of the lubricating oil hole 271 is disposed to face the inner ring inner space 267.

An inner ring outer diameter portion side opening 273b of the lubricating oil hole 271 is disposed to face the inner diameter surface of the holder between the projection 257 of the holder 245 and a bottom portion of the pocket and opens into a fine gap 275 between the inner diameter surface of the holder and the outer circumferential surface of the inner ring.

According to the wedge roller 19A in this configuration, lubricating oil supplied to a lubricating oil supply path 277 (refer to Fig. 29) is supplied to the inner ring inner space 267 and is ejected toward the inner circumferential surface of the holder 245 through the lubricating oil hole 271 as illustrated by an arrow P2 in Fig. 33.

The lubricating oil which has reached the fine gap 231 in the holder after being ejected from the lubricating oil hole 271 flows toward the rolling element 243 with a direction in which the lubricating oil flows being changed by the projection 257 formed on the inner circumferential surface of the holder 245. Accordingly, lubricating oil is supplied to the inner ring raceway surface 255 at high efficiency. In addition, lubricating oil supplied to the rolling element 243 is blown away to the ring roller 21 (refer to Fig. 29) side due to a centrifugal force and is returned to a lubricating oil supply pump (not shown) after lubricating and cooling the ring roller 21 in the end.

According to this configuration, when the lubricating oil is supplied from the center plate 31 to the wedge roller 19A, a necessary and sufficient amount of lubricating oil is reliably supplied to the inside of the bearing of the wedge roller 19A. Accordingly, a decrease in life and seizure of the bearing due to lubrication failure are prevented for the wedge roller 19A also.

### <Eighth Configuration Example>

Next, another configuration example of the large-diameter fixed roller will be described.

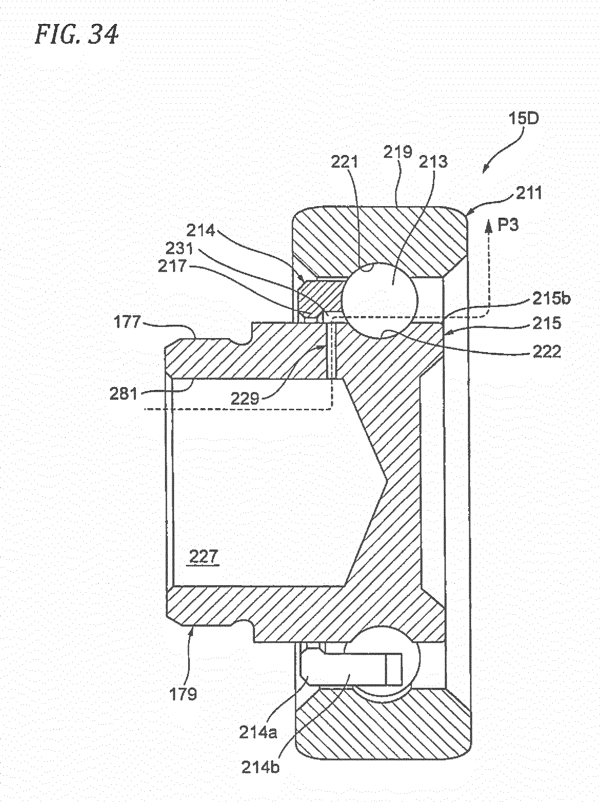

Fig. 34 is a sectional view of a large-diameter fixed roller 15D in this configuration. Fig. 34 is a sectional view corresponding to a section taken along line I-I in Fig. 30.

The large-diameter fixed roller 15D in this configuration has the same configuration as the large-diameter fixed roller 15A except that the inner ring inner space 227 in the inner ring inner diameter portion is formed by using a blind hole 281 instead of having the above-described configuration in which the blanking plug 225 of the large-diameter fixed roller 15C illustrated in Fig. 31 is provided.

According to the large-diameter fixed roller 15D in this configuration, lubricating oil is supplied to the inner ring inner space 227 and the lubricating oil is ejected toward the inner circumferential surface of the holder 214 through the lubricating oil hole 229 as illustrated by an arrow P3 in Fig. 34. The lubricating oil flows toward the rolling element 213 with a direction in which the lubricating oil flows being changed by the projection 217. Accordingly, lubricating oil is supplied to the inner ring raceway surface 222 at high efficiency and effects which are the same as described above can be obtained.

In addition, according to this configuration, since the blind hole 281 is formed, it is possible to reduce the number of components in comparison with a case illustrated in Fig. 31.

Note that, although a configuration for to the large-diameter fixed roller 15D has been described in the above description, the same configuration can also be applied to the small-diameter fixed roller 17. In this case also, effects which are the same as described above can be obtained.

### <Ninth Configuration Example>

Next, another configuration example of the wedge roller will be described.

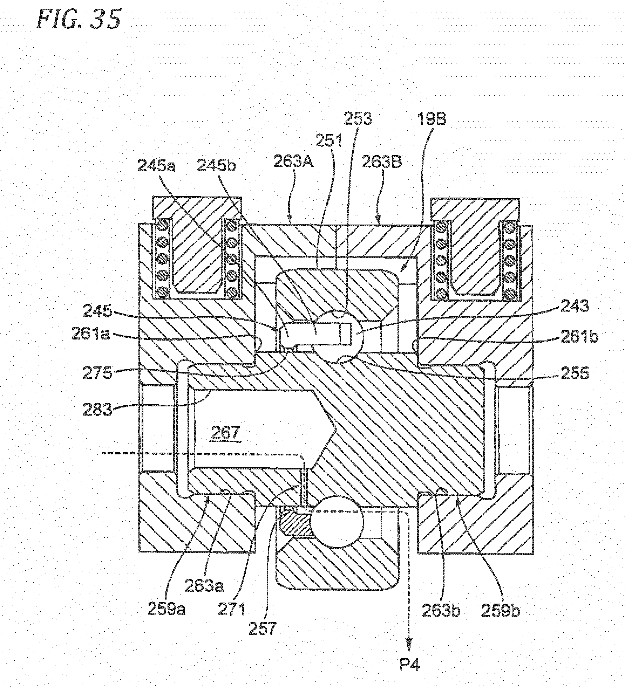

Fig. 35 is a sectional view of a wedge roller 19B in this configuration. Fig. 35 is a sectional view corresponding to a section taken along line J-J in Fig. 32.

The wedge roller 19B in this configuration has the same configuration as the wedge roller 19A except that the inner ring inner space 267 in the inner ring inner diameter portion is formed by using a blind hole 283 instead of having the above-described configuration in which the blanking plug 265 of the wedge roller 19A illustrated in Fig. 33 is provided.

According to the wedge roller 19B in this configuration, lubricating oil is supplied to the inner ring inner space 267 and the lubricating oil is ejected toward the inner circumferential surface of the holder 245 through the lubricating oil hole 271 as illustrated by an arrow P4 in Fig. 35. The lubricating oil flows toward the rolling element 243 with a direction in which the lubricating oil flows being changed by the projection 257. Accordingly, lubricating oil is supplied to the inner ring raceway surface 255 at high efficiency and effects which are the same as described above can be obtained.

In addition, according to this configuration, since the blind hole 283 is formed, it is possible to reduce the number of components in comparison with a case illustrated in Fig. 33.

### <Tenth Configuration Example>

Next, another configuration example of the large-diameter fixed roller will be described.

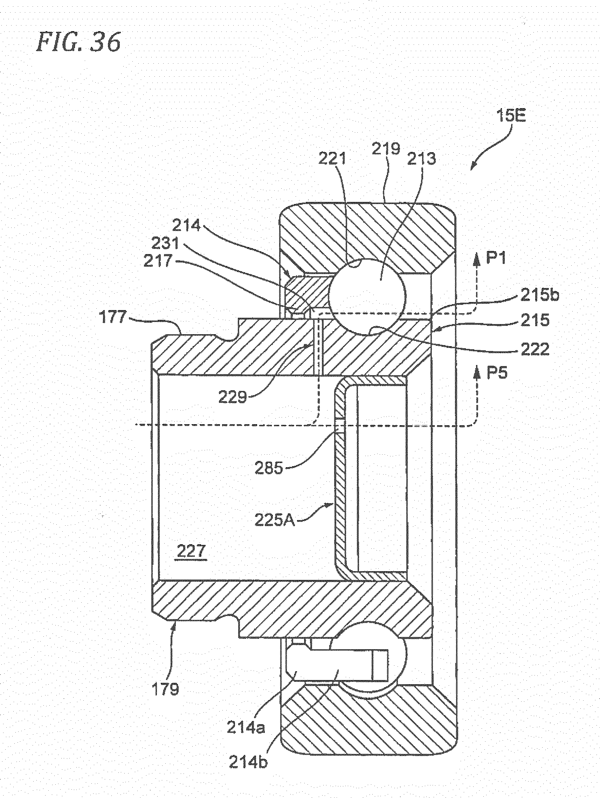

Fig. 36 is a sectional view of a large-diameter fixed roller 15E in this configuration. Fig. 36 is a sectional view corresponding to a section taken along line I-I in Fig. 30.

The large-diameter fixed roller 15E in this configuration has a configuration in which a blanking plug 225A is provided in the inner ring inner diameter portion as with the large-diameter fixed roller 15C which is illustrated in Fig. 31. However, in the large-diameter fixed roller 15E, a lubricating oil hole 285, which penetrates a portion of the blanking plug 225A in the axial direction, is formed. Except for this, the large-diameter fixed roller 15E has the same configuration as the large-diameter fixed roller 15C.

According to the large-diameter fixed roller 15E in this configuration, lubricating oil is supplied to the inner circumferential surface of the holder 214 and the rolling element 213 through the lubricating oil hole 229 as illustrated by the arrow P1. In addition, as illustrated by an arrow P5, the lubricating oil is ejected in the axial direction of the inner ring inner diameter portion through the lubricating oil hole 285 formed in the blanking plug 225A.

Since the lubricating oil hole 285 is formed in the blanking plug 225A, a lubricating oil path is split into two branches and thus it is possible to stably secure the amount of lubricating oil to be supplied to the ring roller 21 (refer to Fig. 29).

Note that, although a configuration for to the large-diameter fixed roller 15E has been described in the above description, the same configuration can also be applied to the small-diameter fixed roller 17. In this case also, effects which are the same as described above can be obtained.

As described above, the present invention is not limited to the above-described embodiments, and combining each configuration in the embodiments and modification and application, which are performed by those skilled in the art on the basis of description in the specification and well-known techniques, are also included in the invention defined and limited by the appended claims.

For example, a configuration, in which a protrusion which includes a fitting surface on the center plate 31 side is provided instead of providing the protrusion 179 for the large-diameter fixed roller and the small-diameter fixed roller and the inner ring inner circumferential surface of the large-diameter fixed roller and the small-diameter fixed roller is press-fitted onto the protrusion, may also be adopted.

In addition, even in a case where the rotation speed of the prime mover is very high and low-speed output is required, the speed increaser in this configuration can be used as a speed reducer while exchanging a rotation input side and a rotation output side.

In addition, the number of wedge rollers which are movable rollers is not limited to one and a plurality of wedge rollers may be provided. In addition, the number of fixed rollers may be one or three or more.

### DESCRIPTION OF REFERENCE NUMERALS AND SIGNS

11 high speed side shaft
13 low speed side shaft
15, 15A, 15B, 15C, 15D, 15E large-diameter fixed roller (fixed roller)
17 small-diameter fixed roller (fixed roller)
19, 19A, 19B wedge roller (movable roller)
21 ring roller
23 housing
29 carrier (roller supporting member)
31 center plate (roller supporting member)
33 annular space
43 high speed shaft housing
45 bearing unit
47 unit accommodating section
51 bearing housing
52 double-row angular bearing (rolling bearing)
53, 55 rolling bearing
59 oil seal (sealing member)
61 supporting shaft
62 maximum outer diameter portion
64A, 64B, 131A, 131B rolling bearing
66 roller holder
66A, 66B division holder
68 knock pin (connecting member)
70 movable roller unit
71 pre-load spring
84, 86 retaining screw (temporary retaining member)
90 pressing surface (other radial end portion)
92, 117, 119 through hole
100, 200, 300, 400, 500, 600, 700 speed increaser (friction roller type speed increaser)
126 lubricating oil supply path
134 hollow hole
138 hollow pipe
141 lubricating oil ejecting port
151, 152 balance correction surface

## Claims

1. A friction roller type speed increaser (100) which includes a high speed side shaft (11), a ring roller (21) that is disposed being eccentric with respect to a rotational axis of the high speed side shaft (11) and can be rotated relative to the high speed side shaft (11), a low speed side shaft (13) that is concentrically coupled to the ring roller (21), at least one fixed roller (15, 17) that can be rotated in a state where an outer circumferential surface thereof abuts onto an outer circumferential surface of the high speed side shaft (11) and an inner circumferential surface of the ring roller (21), at least one movable roller (19) that is disposed in a region in an annular space (33) formed between the ring roller (21) and the high speed side shaft (11), of which the width dimension in a radial direction is small, and that is pressed and urged to be capable of being displaced in a direction in which the width dimension decreases, and a housing (23) that surrounds the ring roller (21), the fixed roller (15, 17), and the movable roller (19), **characterized in that** the friction roller type speed increaser (100) comprises
a bearing unit (45) that includes a cylindrical bearing housing (51) into which the high speed side shaft (11) is inserted, bearings (53, 55) on an inner circumferential portion of the bearing housing (51) which rotatably support the high speed side shaft (11), and a sealing member (59) which is provided at one end portion of the bearing housing (51) and closes an inner space including the bearings (53, 55),
that the bearing unit (45) is floating-supported such that the bearing unit (45) can move in a radial direction of the high speed side shaft (11) in a unit accommodating section (47) formed in the housing (23) and,
that a radial gap between an outer circumferential surface of the bearing unit (45) and the unit accommodating section (47) is larger than an eccentricity amount between the high speed side shaft (11) and a rotational axis of the ring roller (21).

2. The friction roller type speed increaser according to Claim 1, **characterized in**
**that** the bearing unit (45) is floating-supported by O-rings (67, 69) provided on an outer circumferential portion of the bearing unit (45).

3. The friction roller type speed increaser according to Claim 2, **characterized in**
**that** the O-rings (67, 69) are provided in at least two positions which are separated from each other in an axial direction of the bearing unit (45).

4. The friction roller type speed increaser according to Claim 2 or 3, **characterized in**
**that** a recess (81) is disposed between the O-rings (67, 69).

5. A friction roller type speed increaser (100) comprising:
at least one friction roller that has a predetermined transmission ratio and is connected between an input shaft (13) and an output shaft (11);
a ring roller (21) that is disposed being eccentric with respect to a rotational axis of the output shaft (11) and can be rotated relative to the output shaft (11), wherein the input shaft (13) is concentrically coupled to the ring roller (21),
a shaft holder (43) that surrounds the output shaft (11); and
an output shaft unit (45) that is attached to an inner diameter portion of the shaft holder (43) and rotatably supports the output shaft (11),
wherein the output shaft unit (45) includes:
a rolling bearing (53, 55) that rotatably supports the output shaft (11); and
balance correction surfaces (151, 152) which are disposed on axial opposite sides interposing the rolling bearing (53, 55) therebetween;
**characterized in that** the output shaft unit (45) includes
a bearing housing (51) of which an inner diameter portion supports an outer circumferential surface of the rolling bearing (53, 55) and of which an outer diameter portion is floating-supported by the shaft holder (43) such that the outer diameter portion can move in a radial direction; and
an oil seal (59) that is provided in the bearing housing (51) and seals an outer circumferential portion of the output shaft (11), and
that a radial gap between an outer circumferential surface of the bearing housing (51) and the shaft holder (43) is larger than an eccentricity amount between the output shaft (11) and a rotational axis of the ring roller (21).

## Patentansprüche

1. Reibrad-Übersetzungsgetriebe (100), das eine antriebsseitige Welle (11), ein Ringrad (21), das exzentrisch in Bezug auf eine Drehachse der antriebsseitigen Welle (11) angeordnet ist und in Bezug auf die antriebsseitige Welle (11) gedreht werden kann, eine abtriebsseitige Welle (13), die konzentrisch mit dem Ringrad (21) gekoppelt ist, wenigstens ein festes Rad (15, 17), das in einem Zustand gedreht werden kann, in dem eine Außenumfangsfläche von diesem an einer Außenumfangsfläche der antriebsseitigen Welle (11) und einer Innenumfangsfläche des Ringrades (21) anstößt, wenigstens ein bewegliches Rad (19), das in einem Bereich in einem zwischen dem Ringrad (21) und der antriebsseitigen Welle (11) gebildeten ringförmigen Raum (33) angeordnet ist, von dem das Breitenmaß in einer radialen Richtung klein ist, und das zusammengedrückt wird und gezwungen wird, in der Lage zu sein, in einer Richtung verschoben zu werden, in der das Breitenmaß abnimmt, und ein Gehäuse (23), welches das Ringrad (21), das feste Rad (15, 17) und das bewegliche Rad (19) umgibt, umfasst, **dadurch gekennzeichnet, dass** das Reibrad-Übersetzungsgetriebe (100)
eine Lagereinheit (45), das ein zylindrisches Lagergehäuse (51 umfasst, in das die antriebsseitige Welle (11) eingesetzt ist, Lager (53, 55) auf einem Innenumfangsabschnitt des Lagergehäuses (51), die drehbar die antriebsseitige Welle (11) stützen, und ein Dichtelement (59), das an einem Endabschnitt des Lagergehäuses (51) angeordnet ist und einen Innenraum umfassend die Lager (53, 55) verschließt, umfasst,
dass die Lagereinheit (45) schwimmend gelagert ist, so dass sich die Lagereinheit (45) in einer radialen Richtung der antriebsseitigen Welle (11) in einem im Gehäuse (23) gebildeten Einheitenaufnahmeabschnitt (47) bewegen kann, und
dass ein radialer Spalt zwischen einer Außenumfangsfläche der Lagereinheit (45) und dem Einheitenaufnahmeabschnitt (47) größer ist als eine Exzentrizitätsmenge zwischen der antriebsseitigen Welle (11) und einer Drehachse des Ringrads (21).

2. Reibrad-Übersetzungsgetriebe nach Anspruch 1, **dadurch gekennzeichnet, dass** die Lagereinheit (45) von auf einem Außenumfangsabschnitt der Lagereinheit (45) angeordneten O-Ringen (67, 69) schwimmend gelagert ist.

3. Reibrad-Übersetzungsgetriebe nach Anspruch 2, **dadurch gekennzeichnet, dass** die O-Ringe (67, 69) in wenigstens zwei Positionen angeordnet sind, die voneinander in einer axialen Richtung der Lagereinheit (45) getrennt sind.

4. Reibrad-Übersetzungsgetriebe nach Anspruch 2 oder 3, **dadurch gekennzeichnet, dass** eine Aussparung (81) zwischen den O-Ringen (67, 69) angeordnet ist.

5. Reibrad-Übersetzungsgetriebe (100) umfassend:
wenigstens ein Reibrad, das ein vorgegebenes Übersetzungsverhältnis aufweist und zwischen einer Antriebswelle (13) und einer Abtriebswelle (11) verbunden ist;
ein Ringrad (21), das exzentrisch in Bezug auf eine Drehachse der Abtriebswelle (11) angeordnet ist und in Bezug auf die Abtriebswelle (11) gedreht werden kann, wobei die Antriebswelle (13) konzentrisch mit dem Ringrad (21) gekoppelt ist,
einen Wellenhalter (43), der die Abtriebswelle (11) umgibt; und
eine Abtriebswelleneinheit (45) die an einem Innendurchmesserabschnitt des Wellenhalters (43) befestigt ist und drehbar die Abtriebswelle (11) stützt,
wobei die Abtriebswelleneinheit (45) umfasst:
ein Wälzlager (53, 55), das drehbar die Abtriebswelle (11) stützt; und
Wuchtkorrekturflächen (151, 152), die auf axialen gegenüberliegenden Seiten mit dem Wälzlager (53, 55) dazwischen angeordnet sind;
**dadurch gekennzeichnet, dass** die Abtriebswelleneinheit (45)
ein Lagergehäuse (51), von dem ein Innendurchmesserabschnitt eine Außenumfangsfläche des Wälzlagers (53, 55) stützt und von dem ein Außendurchmesserabschnitt schwimmend vom Wellenhalter (43) gestützt wird, so dass sich der Außendurchmesserabschnitt in einer radialen Richtung bewegen kann; und
eine Öldichtung (59), die im Lagergehäuse (51) angeordnet ist und einen Außenumfangsabschnitt der Abtriebswelle (11) abdichtet, umfasst, und
dass ein radialer Spalt zwischen einer Außenumfangsfläche des Lagergehäuses (51) und dem Wellenhalter (43) größer ist als eine Exzentrizitätsmenge zwischen der Abtriebswelle (11) und einer Drehachse des Ringrads (21).

## Revendications

1. Dispositif d'augmentation de vitesse de type à rouleaux à friction (100) qui inclut un arbre du côté vitesse élevée (11), un rouleau à bagues (21) qui est disposé en étant excentré par rapport à l'axe de rotation de l'arbre du côté vitesse élevée (11) et peut être mis en rotation par rapport à l'arbre du côté vitesse élevée (11), un arbre du côté basse vitesse (13) qui est couplé de façon concentrique au rouleau à bagues (21), au moins un rouleau fixe (15, 17) qui peut être mis en rotation de telle sorte que sa surface circonférentielle externe vienne en butée sur la surface circonférentielle externe de l'arbre du côté vitesse élevée (11) et sur la surface circonférentielle interne du rouleau à bagues (21), au moins un rouleau mobile (19) qui est disposé dans une zone située dans un espace annulaire (33) formé entre le rouleau à bagues (21) et l'arbre du côté vitesse élevée (11) dont la dimension de la largeur dans une direction radiale est faible, et qui est pressé et contraint pour pouvoir être déplacé dans une direction dans laquelle la dimension de la largeur diminue, et une enveloppe (23) qui entoure le rouleau à bagues (21), le rouleau fixe (15, 17) et le rouleau mobile (19), **caractérisé en ce que** le dispositif d'augmentation de vitesse de type à rouleaux à friction (100) comprend :
une unité formant palier (45) qui inclut une enveloppe de paliers (51) cylindrique dans laquelle est inséré l'arbre du côté vitesse élevée (11), des paliers (53, 55) sur une partie circonférentielle interne de l'enveloppe de paliers (51) qui supporte tout en pouvant tourner l'arbre du côté vitesse élevée (11), ainsi qu'un élément de scellement (59) qui est prévu à une première extrémité de l'enveloppe de paliers (51) et ferme l'espace interne incluant les paliers (53, 55),
**en ce que** l'unité formant palier (45) est supportée tout en pouvant flotter de telle sorte que l'unité formant palier (45) puisse se déplacer dans une direction radiale de l'arbre du côté vitesse élevée (11) dans une section d'accueil d'unité (47) formée dans l'enveloppe (23), et
**en ce qu'**un intervalle radial ménagé entre la surface circonférentielle externe de l'unité formant palier (45) et la section d'accueil de l'unité (47) est plus grand que la valeur d'excentricité entre l'arbre du côté vitesse élevée (11) et l'axe de rotation du rouleau à bagues (21).

2. Dispositif d'augmentation de vitesse de type à rouleaux à friction selon la revendication 1, **caractérisé en ce que**
l'unité formant palier (45) est supportée tout en pouvant flotter par des joints toriques (67, 69) prévus sur la partie circonférentielle externe de l'unité formant palier (45).

3. Dispositif d'augmentation de vitesse de type à rouleaux à friction selon la revendication 2, **caractérisé en ce que**
les joints toriques (67, 69) sont prévus dans au moins deux positions séparées l'une de l'autre dans la direction axiale de l'unité formant palier (45).

4. Dispositif d'augmentation de vitesse de type à rouleaux à friction selon la revendication 2 ou la revendication 3, **caractérisé en ce que**
un évidement (81) est disposé entre les joints toriques (67, 69).

5. Dispositif d'augmentation de vitesse de type à rouleaux à friction (100) comprenant :
au moins un rouleau à friction qui présente un rapport de transmission prédéterminé et qui est relié entre un arbre d'entrée (13) et un arbre de sortie (11),
un rouleau à bagues (21) qui est disposé en étant excentré par rapport à l'axe de rotation de l'arbre de sortie (11) et peut être mis en rotation par rapport à l'arbre de sortie (11), l'arbre d'entrée (13) étant couplé de façon concentrique au rouleau à bagues (21),
un support d'arbre (43) qui entoure l'arbre de sortie (11), et
une unité d'arbre de sortie (45) qui est fixée à une partie du diamètre interne du support d'arbre (43) et qui supporte l'arbre de sortie (11) tout en pouvant tourner,
dans lequel l'unité d'arbre de sortie (45) inclut :
un palier roulant (53, 55) qui supporte tout en pouvant tourner l'arbre de sortie (11), et
des surfaces de correction d'équilibrage (151, 152) qui sont disposées sur des côtés opposés axiaux en intercalant le palier roulant (53, 55) entre elles,
**caractérisé en ce que** l'unité d'arbre de sortie (45) inclut :
une enveloppe de paliers (51) dont une partie de diamètre interne supporte la surface circonférentielle externe du palier roulant (53, 55) et dont une partie de diamètre externe est supportée par le support d'arbre (43) tout en pouvant flotter de sorte à ce que le diamètre externe puisse se déplacer dans une direction radiale, et
un joint d'étanchéité (59) qui est disposé dans l'enveloppe de paliers (51) et qui rend étanche la partie circonférentielle externe de l'arbre de sortie (11), et
**en ce qu'**un intervalle radial entre la surface circonférentielle externe de l'enveloppe de paliers (51) et le support d'arbre (43) est plus grand que la valeur d'excentricité entre l'arbre de sortie (11) et l'axe de rotation du rouleau à bagues (21).
